# EUROPEAN PATENT SPECIFICATION

(11) **EP 4 000 848 B1**
(45) Date of publication and mention of the grant of the patent: **31.01.2024**
(21) Application number: 21208302.6
(22) Date of filing: 15.11.2021
(51) Int. Cl.: B29C 31/00, B29C 44/58, B29C 44/14, B29C 44/42, B29C 33/34, F25D 23/02

(54) **FOAMING METHOD AND APPARATUS**
SCHÄUMUNGSVERFAHREN UND SCHÄUMVORRICHTUNG
PROCÉDÉ ET APPAREIL DE MOUSSAGE

(30) Priority: 17.11.2020 IT 202000027522
(43) Date of publication of application: 25.05.2022
(73) Proprietor: Cannon Ergos S.P.A., 20121 Milan (IT)
(72) Inventor: VOLPATO, Marco, 20121 Milano (IT); DE ROSSI, Claudio, 20121 Milano (IT)
(74) Representative: Luppi Intellectual Property S.r.l.

(56) References cited:
- EP-A1- 3 037 237
- EP-A1- 3 112 115
- WO-A1-2013/054255
- WO-A1-2015/032908

## Description

### BACKGROUND OF THE INVENTION

This invention relates to a method and an apparatus for simultaneous foaming of objects, such as doors for a refrigerator, for a display bench, for a building or the like, and, in general, panels or objects, mostly substantially two-dimensional, i.e. having two dimensions that prevail over a third dimension, and provided with outer coating elements, such as half shells or shaped panels made of plastics, metal or slabs or sheets that are flat, curved or grooved between which coating elements a thermally insulating intermediate layer has to be placed that is made of polyurethane or phenol material.

### PRIOR ART

It is known that the process of foaming doors for refrigerators is currently performed using two different basic technologies for conveying and maintaining doors in respective moulds during the production cycle.

A first technology is based on conveying doors by a plant that has a drum that is rotatable around a horizontal rotation axis.

On this drum, several mould-holder presses are housed, each mould-holder press comprising two upper and lower flat containing surfaces, suitable for being positioned according to respective horizontal planes and parallel to one another, and the distance of which planes from one another is variable.

A mould-holder press is provided for each pair of coupled half moulds.

The mould-holder presses are then mounted on the drum carousel, are rotated integrally with the latter and are each driven by a dedicated drive device to move the aforesaid containing and pressing surfaces towards and away from one another.

The lower and upper half moulds are coupled with the aforesaid containing or pressing surfaces acting to contrast the foam that, expanding inside the mould, exerts very high pressure until values of 6 - 8 Newton per square centimetre are reached.

To the two lower and upper containing and pressing surfaces, respective half moulds are thus fixed that support and maintain in position the respective half-shells or shaped panels intended to define the outer face and the inner face of the door of the refrigerator.

An operator is assigned to loading the outer face half shell of the door onto the upper half shell and the inner face half shell (e.g. a thermoformed element made of plastics) onto the lower half mould, after which the drum carousel is rotated in an indexed manner.

In the zone dedicated to the operator, the foamed door is unloaded and the half shells or housings are unloaded to foam the doors to be formed.

The injection of the polyurethane mixture and the polymerization step of the foam can then occur whilst the drum carousel rotates by successive steps.

The aforesaid traditional drum plant has some limits. Firstly, the multiplicity of mould-holder presses with the respective drive devices leads to great structural and functional complexity that entails, from the dynamic point of view, significant inertia masses that set functional and productive limits on the entire plant.

The need to have to drive each time each mould-holder press to close and maintain in position the respective mould containing the door to be foamed also implies an increase in the cycle times that affects the productivity levels of the entire plant.

A second technology provides conveying of the doors by a plant equipped with a dual chain conveying device, the so-called *"paternoster".*

The dual chain conveyor belt is shaped to support and draw a plurality of mould holders, each of which contains a pair of half moulds for foaming a door for a refrigerator.

The mould holders advance maintaining a horizontal lie by complex mechanical coupling systems for coupling the chain elements with the respective drive pinions. In order to perform the various steps of extracting the foamed door, inserting new half-shells to be foamed etc., two operators or several operators are necessary.

Both the drum plant and the *"paternoster"* plant described above have limits: in order to satisfy the increasingly strict demands of refrigerator manufacturers, which set increasing quality levels with containment of geometric strains on the shells below increasingly strict acceptability thresholds, the aforesaid plants must be structured in a very heavy and robust manner.

In the case of the *"paternoster"* plant. very robust moulds and mould holders are used, with great thicknesses in order to contrast the thrusts of the expanding mixture in each door in the foaming step and in the case of the drum plant, as mentioned above, very heavy and structurally and functionally complex presses are required.

This is all translated into great weight and inertia, which inevitably also influence the speed and thus the productivity of such plants.

Another foaming method and apparatus are known from WO2015/032908, which discloses a method and corresponding apparatus for simultaneously foaming two objects or two or more pairs of objects each having two prevalent dimensions compared with a third dimension and being provided with two outer coating elements of the shell type or of the flat, curved or thermoformed slab or sheet type in order to compose the elements into a box element, for example for forming a refrigerator door between said two outer coating elements there being interposed an intermediate layer made of expanded polyurethane or phenolic thermally insulating material.

In the light of what has been described above, ample room for improvement is thus found in the field of foaming apparatuses for foaming doors of refrigerators and the like.

### OBJECTS OF THE INVENTION

One object of the present invention is to improve current systems for foaming doors, in particular doors of refrigerators or, more general, of substantially two-dimensional objects. Another object is to improve current foaming plants, by increasing the versatility and productive capacity thereof.

A further object is to simplify foaming plants both structurally and functionally.

In particular, it is intended to provide a foaming apparatus that is constructionally simple, with a reduced cost and overall dimensions and is able to reduce the cycle times and to offer great functional flexibility.

In particular, one object is to provide a solution that successfully meets current needs of the refrigerator manufacturing industry in which there is an increasingly marked tendency to diversify the various models, varying the aesthetic and geometric appearance thereof, the dimensions and combination between lower and upper doors, thus making necessary a continuous increase of the various geometric configurations of the containing moulds dedicated to the manufacture of the different geometric shapes of doors.

One object of the present invention is thus to provide a solution for foaming doors of refrigerators that is able to adapt in real time *("just in time")* to the various desired geometric shapes, fulfilling each time the sequence of orders coming from the market.

### SHORT DESCRIPTION OF THE INVENTION

These and other objects and advantages of the invention are achievable by an apparatus and a method according to what is defined in the appended claims.

The method and the apparatus according to the invention enable the objects mentioned previously to be achieved.

In particular, the apparatus according to the proposed solution is significantly simplified from the structural point of view as there is no need to provide the mould-holder presses and the connected devices for lifting/lowering or driving the presses.

The first and second rolling means arranged at a set reciprocal distance to define the housing cells perform effectively clamping and maintenance without the need for complex and costly drive systems and clamping devices provided with specific and expensive mechanisms and articulated joints.

Owing to the service and transfer carousel cooperating in synergy with the rotatable drum unit, excellent results are achieved in terms of reduction of process time, with clear financial advantages.

Further features and advantages will be clear from the appended claims, from the figures and from the description that follows.

### SHORT DESCRIPTION OF THE DRAWINGS

The invention can be better understood and implemented with reference to the appended drawings, which illustrate an embodiment thereof by way of non-limiting example, in which:

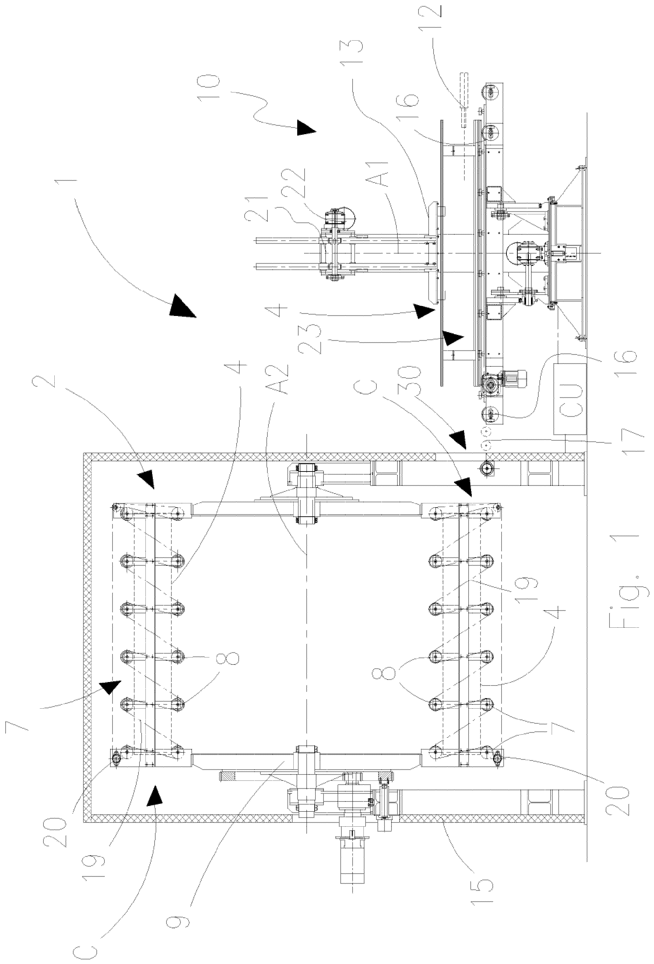

Figure 1 shows, according to a frontal view, an apparatus for foaming doors for refrigerators according to the invention;
Figure 2 is a top view of the apparatus in Figure 1;

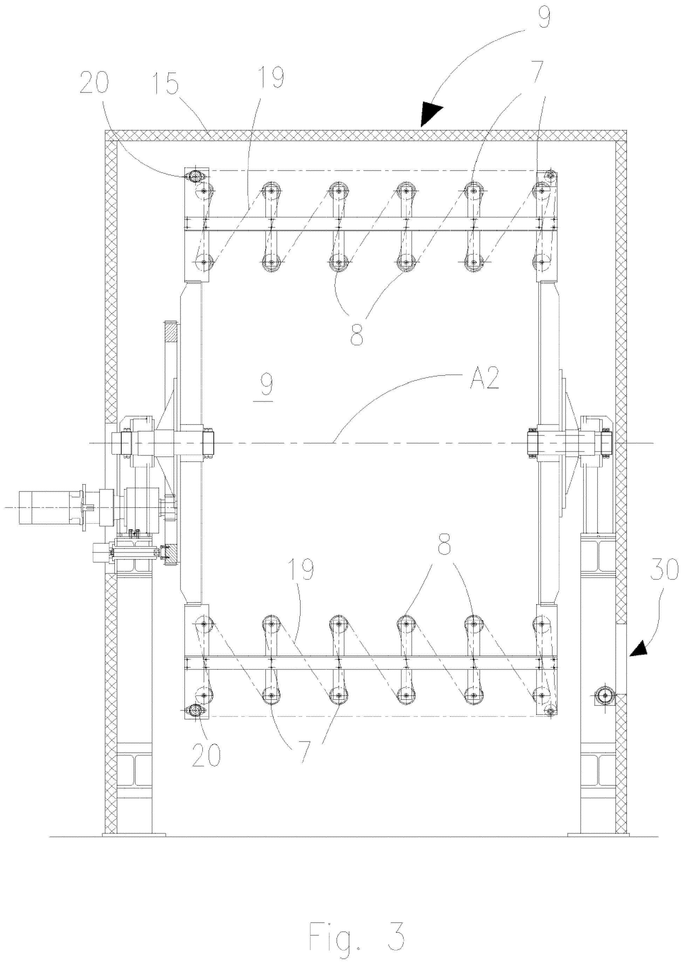

Figure 3 shows a drum unit - of the apparatus according to the invention - housed inside a heating chamber;

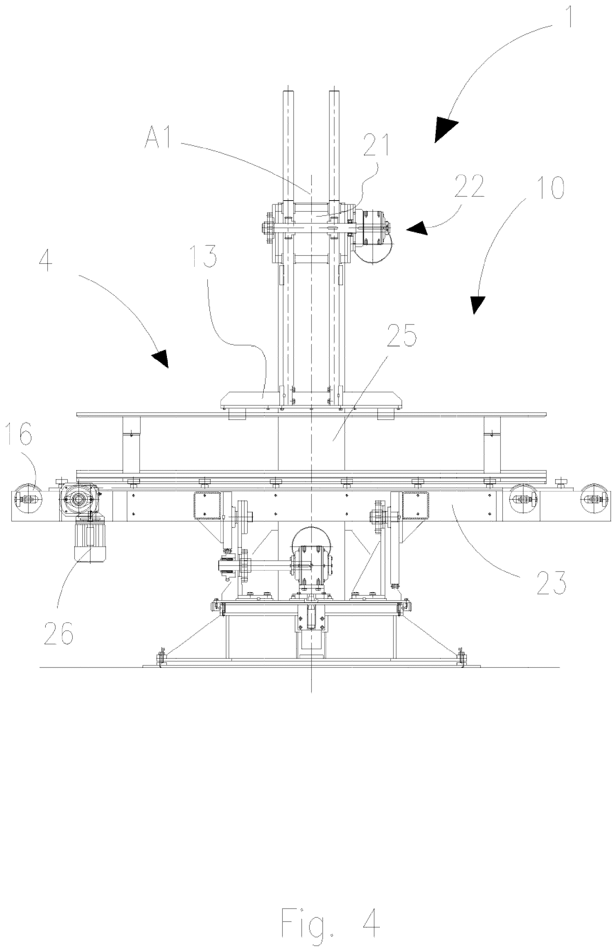

Figure 4 shows a service and transfer carousel that is part of the apparatus according to the invention;

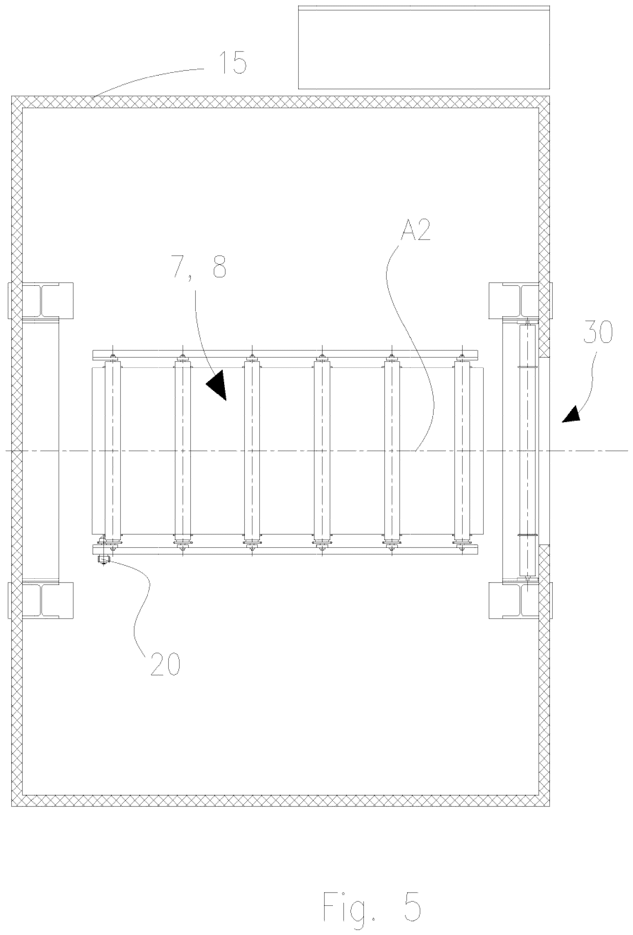

Figure 5 is a horizontal section of the heating chamber containing the drum unit;

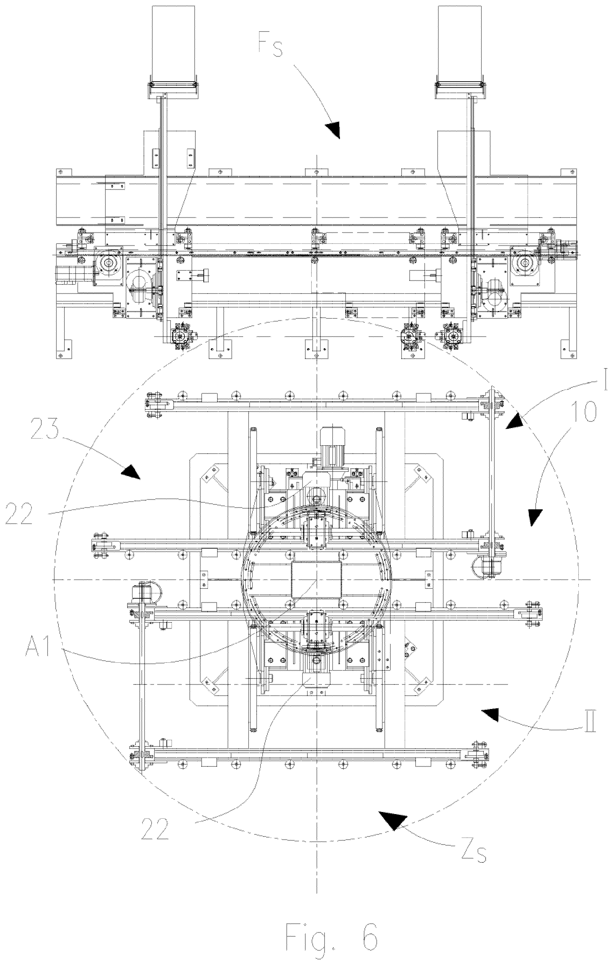

Figure 6 is a top view of the service and transfer carousel and of a foaming station included in the apparatus;
Figure 7 is a side view of the apparatus in which in the foreground the service and transfer carousel and the foaming station are visible;

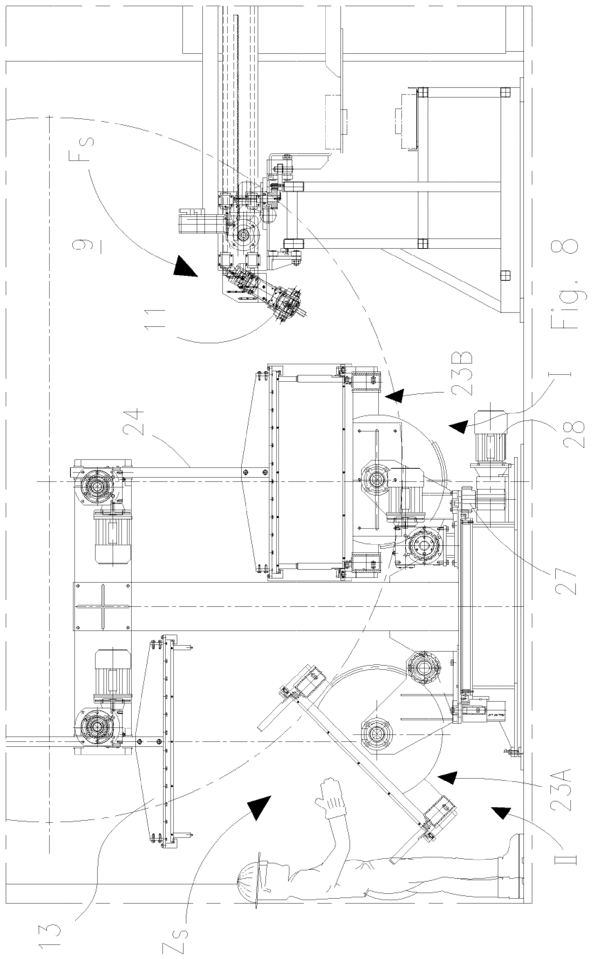

Figure 8 shows an enlarged portion of Figure 7;

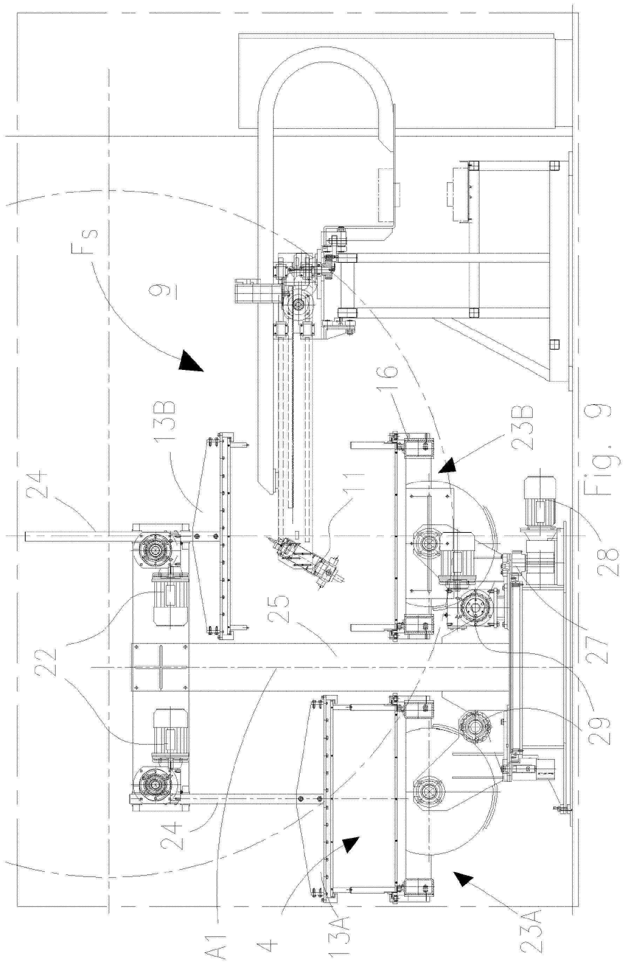

Figure 9 is a view that is similar to Figure 7 but shows the service and transfer carousel and the foaming station in a different operating position;

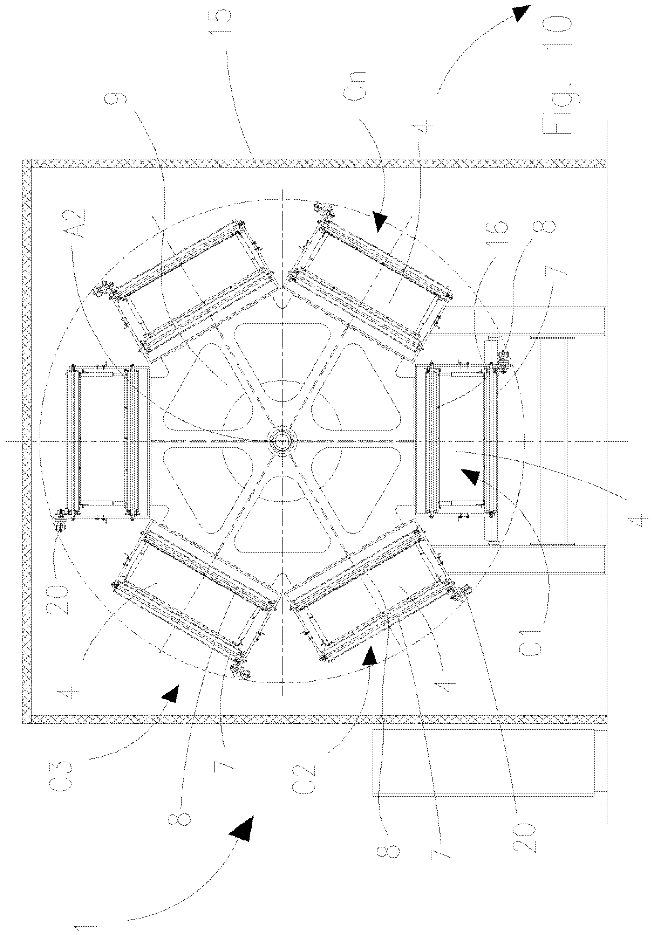

Figure 10 is another side view of the containing chamber with the drum unit;
Figure 11 shows schematically a modular moulding unit that includes the two moulding elements and respective upper and lower reinforcing modular superstructures;
Figures 12 and 13 show second respectively top and side views of the modular moulding unit of Figure 11;
Figure 14 shows enlarged details of centring and coupling means provided on the superstructures of the modular moulding unit;
Figure 15 shows a modular moulding unit (with reinforcing superstructures) in closed configuration;

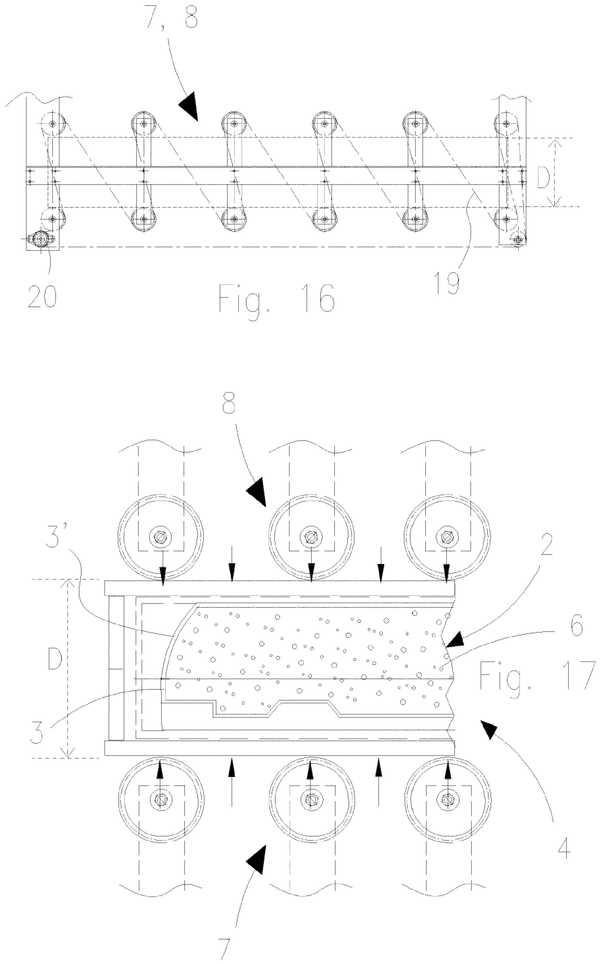

Figure 16 is an enlarged detail showing presser rolling means that is provided in the drum unit of the apparatus;
Figure 17 shows schematically a portion of modular moulding unit - containing a door to be foamed - on which a pressing rolling means acts.

### DETAILED DESCRIPTION OF THE INVENTION

With reference to the attached Figures, an apparatus 1 is shown for foaming substantially two-dimensional objects, i.e. having two dimensions that are much greater than a third dimension.

The apparatus 1 (and the corresponding foaming method) is particularly suitable for foaming doors or pairs of doors 2 for refrigerators of domestic or industrial type, or also for foaming door-lids for chest freezers, insulating panels for display benches, doors and windows for houses and buildings and other products.

The objects 2 to be foamed by the apparatus 1 are provided with outer coating elements 3, 3', such as half-shells or shaped panels made of plastics, metal or slabs or sheets that are flat, curved, or shaped by thermoforming, coupled for shaping a hollow box possibly having a circumferential seal between which foaming occurs to generate an intermediate layer 6 made of thermally insulating phenol or polyurethane material.

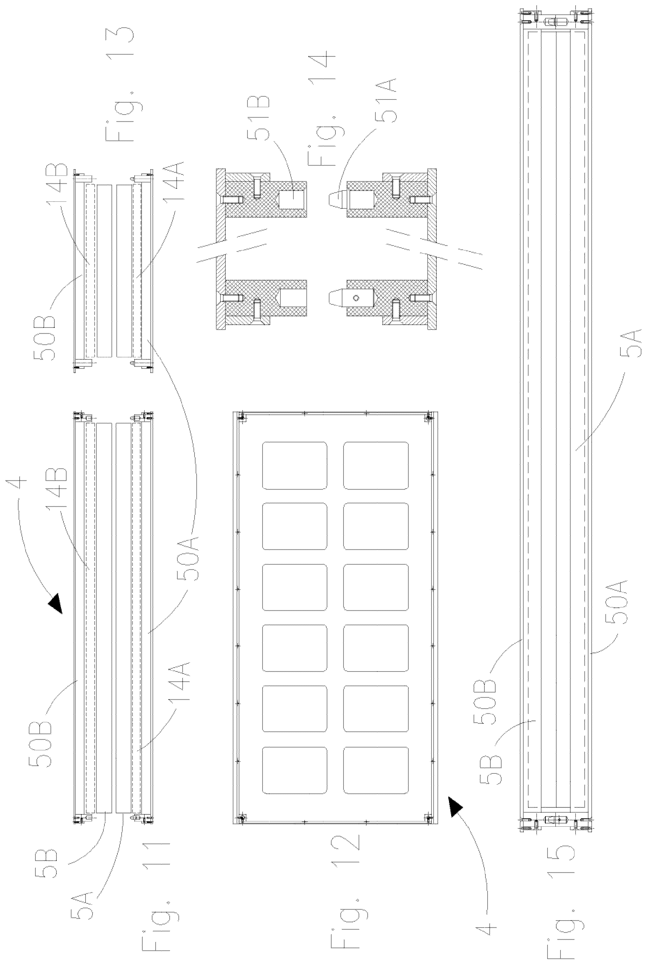

In the apparatus 1 according to the invention, a plurality of modular moulding units 4 is included, each consisting of a first half mould 5A and of a second half mould 5B that are mutually couplable/uncouplable, that are suitable for receiving respective coating elements 3, 3' intended to define the outer surfaces of the corresponding objects 2 to be obtained. As shown better in Figures 11 to 15, the first half mould 5A and the second half mould 5B are fitted removably to respective reinforcing modular superstructures 50A, 50B. Between each reinforcing superstructure 50A, 50B and the respective half mould 5A, 5B, if requested, a support pallet 14A, 14B can be interposed that permits rapid and easy replacement of the half moulds 5A, 5B without also having to extract the reinforcing superstructures 50A, 50B.

The reinforcing superstructures 50A, 50B include centring and coupling elements 51A, 51B (male elements and female elements), suitable for ensuring correct positioning and reciprocal coupling of the reinforcing superstructures 50A, 50B in the closed configuration of the modular moulding unit 4.

The centring and coupling elements 51A, 51B are for example of the taper pin (male element) type that engages a respective slot (female element).

According to one possible variant, the modular moulding units 4 consist only of the two half moulds 5A, 5B, the aforementioned reinforcing superstructures (understood as distinct elements) being absent. In this case, the half moulds 5A, 5B are shaped and sized in a very robust structural manner, so as to be able to support effectively the stress imparted by the mixture and the contrasting actions exerted by the pressing rollers 7, 8.

The apparatus 1 comprises a rotatable drum unit 9, configured for storing the modular moulding units 4 and advancing along at least part of a closed advancement path P along which polymerization and shape stabilization process occurs for the foamed objects 2. The apparatus comprises a containing chamber 15 provided with a thermostating system inside which the drum unit 9 is housed.

The containing chamber 15, in particular, comprises a hot air kiln and is configured for subjecting the modular moulding units 4, advancing along the advancement path P, to a heating step to promote the polymerization process della chemically reactive mixture.

The rotatable drum unit 9 is rotatable around a horizontal rotation axis A2 and is configured for receiving the modular moulding units 4 with the greater dimensions thereof oriented longitudinally parallel to said rotation axis A2.

Owing to this configuration, the overall dimensions are minimized, or, with the same overall dimensions, storage of a greater number of modular moulding units 4 on the drum unit 9 is permitted.

On the drum unit 9, a series is fitted of first rolling means 7 that are further than the rotation axis A2, and a series of second rolling means 8 placed at a shorter distance from the rotation axis A2 than the first rolling means 7.

The first 7 and second 8 rolling means are arranged for inserting, positioning and maintaining modular moulding units 4 in a clamped condition on the drum unit 9.

As will be clearer from the following description, the first 7 and second 8 rolling means ensure stable closure and clamping of the half moulds 5A, 5B that are in reciprocal contact without having to use bolts, padlocks or similar devices to keep the single modular moulding units 4 closed.

The action of clamping and maintaining in a closed position the modular moulding units 4 is achieved by applying opposing pressure actions that are exerted by the aforesaid first 7 and second 8 rolling means that come into contact on opposite sides on each modular moulding unit 4.

The presence of the mutually couplable superstructures or reinforcing structures 50A, 50B disclosed above, associated with the respective half moulds 5A, 5B, ensures effective containment of the deformation arising from the expansion pressure of the foam inside the modular moulding unit 4.

The first rolling means 7 and the second rolling means 8 comprise respectively first pressing rollers 7 and second pressing rollers 8 arranged at a reciprocal operating distance D so as to define, on the rotatable drum unit 9, a plurality of housing cells C1, ..., Cn or housing cubicles intended for receiving the same number of respective modular moulding units 4. Inserting and extracting a modular moulding unit 4 into and from a housing cell C1, ..., Cn is possible through a transit opening 30 obtained in the containing chamber 15. In particular, the transit opening 30 is obtained at a height corresponding to the lowest position that each housing C1, ..., Cn can adopt in the rotation of the drum unit 9.

The first pressing rollers 7 and the second pressing rollers 8 are mutually spaced apart and arranged to exert on the opposite faces of each modular moulding unit 4 opposite pressure and clamping actions to contrast from the exterior the thrusts exerted by the expanding foam inside the modular moulding unit 4.

The modular moulding units 4 can be adapted to the gap (size in section) of the housing cell C, i.e. to the operating distance D between the first pressing rollers 7 and the second pressing rollers 8, owing to the aforementioned support pallets 14A, 14B. The pallets 14A, 14B, in addition to permitting rapid and easy replacement of the half moulds 5A, 5B, also enable the thickness of the two coupled half moulds and of the corresponding support and reinforcing structures 50A and 50B to be adapted to the aforesaid operating distance D. According to a first embodiment, the first pressing rollers 7 and the second pressing rollers 8 are idling rollers, i.e. fitted in a freely rotatable manner to the drum unit 9.

In accordance with a second embodiment, the first pressing rollers 7 and the second pressing rollers 8 are motor-driven rollers that are drivable to perform respectively the insertion and expulsion of each modular moulding unit 4 into/from the corresponding housing cell C1, ..., Cn obtained on the drum unit 9.

In this case, all the first pressing rollers 7 of a series and all the second pressing rollers 8 of a second series 8 are driven by a single shared motion-transmission element 19 that can comprise a belt, a chain, or other equivalent mechanical transmission means.

In accordance with a third embodiment, the first rolling means 7 and the second rolling means 8 comprise rollers configured with a convex profile to adapt to deflecting actions. In accordance with a fourth embodiment, the first rolling means 7 and the second rolling means 8 comprise rollers configured with a coating made of an elastic material such as rubber to exert a better distributed action on said drum unit 9.

In accordance with a fifth embodiment, the first rolling means 7 and the second rolling means 8 comprise rollers configured with circumferential slots distributed to exert concentrated actions in strengthened parts of the mould.

The transmission element 19 is wound alternatingly along a path of the "zig-zag" first on a roller of one series and subsequently on a corresponding conjugated roller of the other series of pressing rollers and is moved by a respective motor 20, for example an electric motor.

Owing to this configuration, a drive system is defined for the rollers that is at the same time significantly simplified and equally effective.

The motor-driven pressing rollers 7, 8, in addition to performing the function of positioning and maintaining the modular moulding units 4 in a well-closed position, also perform the function of promoting the insertion and expulsion of the moulding units 4 into/from the drum unit 9 simply, fast and precisely.

The apparatus 1 further comprises a service and transfer carousel 10 placed in a position adjacent to the drum unit 9 and rotatable around a vertical axis A1.

As will be clear from the following description, at the service and transfer carousel 10 a service zone-station I (entering/exiting the drum unit 9) and a service zone-station II are defined, for the preparing and loading operations.

Precisely, the service and transfer carousel 10 comprises a support plane 23 divided into two parts 23A, 23B, intended to simultaneously receive each of the respective modular moulding units 4 placed on sides opposite the vertical axis A1: precisely, a modular moulding unit 4 that has to be subjected, in a service zone Zs, to preparing and loading operations, and a modular moulding unit 4 that is already ready for foaming (in open mould or in closed mould configuration) are supported simultaneously, the modular moulding unit 4 that is already ready for foaming is intended, once closed, to be loaded onto the drum unit 9 in the appropriate housing shell Cn.

Each part 23A, 23B, of the support plane is further tilted, by a toothed coupling and reduction gear 29, around a horizontal axis so as to vary the lying plane thereof. In this manner, it is possible to tilt a half mould in the service zone Zs, thus facilitating and making more ergonomic the operations for a possible operator.

The support plane 23 is rotated around the vertical axis A1 owing to the presence of toothed coupling 27 connected to a drive motor 28.

The service and transfer carousel 10 is thus configured for enabling - in the aforesaid service zone Zs - operations of preparing, loading with subsequent closing and insertion of the modular moulding units 4 on the drum unit 9.

Further, the service and transfer carousel 10 is configured for the operations of removing the modular moulding units 4 from the drum unit 9 and for the subsequent operations of opening and removing the foamed objects 2 from the modular moulding units 4.

The service and transfer carousel 10 is rotatable by 180°, in opposite rotation directions and in an alternating manner, around the vertical axis A1 to transfer a modular moulding unit 4 that has just been prepared from the aforesaid service zone Zs to a proximity position for insertion into the drum unit 9 and for transferring a modular moulding unit 4 - containing the foamed object 2 and removed from the drum unit 9 - again to the service zone Zs to enable the object 2 that has just been obtained to be removed and to make new preparing and loading operations possible.

In one embodiment, the operations of removing finished objects 2 and the operations of preparing and loading moulding units are performed manually, by an operator O operating near the service zone Zs.

In another embodiment, the apparatus comprises a handling device configured for removing, in an automated manner, the finished objects 2 and for loading and positioning in the open half moulds 5A, 5B new coating elements 3, 3' or shells and/or inserts to be foamed.

On the service and transfer carousel 10, two taking members 13A, 13B of the suction or gripper or equivalent type are provided that are configured for coupling/uncoupling the first half mould 5A from the respective half mould 5B to open and close each modular moulding unit 4.

The two taking members 13 are arranged so as to be able to each operate on a respective parte 23A and part 23B of the support plane 23.

Precisely, the service and transfer carousel 10 comprises a stationary crosspiece 21 placed at a certain height and supported by a vertical upright 25, to which two motors 22 are fitted to move the respective taking members 13A and 13B.

Each taking member 13 is supported by a rack 24 that engages a toothed wheel mechanism driven by a respective motor 22, or reduction gear, so as to be able to move vertically. In this manner, the taking member 13 can be raised or lowered to uncouple/couple a half mould from/with the other half mould.

The parts 23A and 23B of the support plane 23 that is included in the service and transfer carousel 10 comprise support rollers 16 for the modular moulding units 4 and which enable a modular moulding unit 4 to slide when it has to be loaded onto the drum unit 9.

The rollers 16 of the support plane 23, in one embodiment, are idling rollers. In this case, a pushing and pulling device 12 is provided that is configured for inserting removing a modular moulding unit 4 into/from, the respective housing cell C1, ..., Cn of the drum unit 9. The pushing and pulling device 12, that can be for example of the pneumatic or hydraulic cylinder type or be electrically driven, acts to push/pull a modular moulding unit 4, sliding the modular moulding unit 4 on the roller plane 16 indicated above that is obtained on the service and transfer carousel 10.

Between the service and transfer carousel 10 and the drum unit 9, a further roller plane 17 can be interposed to facilitate the sliding transit and transfer of the modular moulding units 4 from the service carousel 10 to the drum unit 9 and vice versa.

The further roller plane 17 is also used to enable a suitable spacing to be set between the service and transfer carousel 10 and the drum unit 9, for example in order to facilitate possible maintenance tasks or for other needs.

In another embodiment, the rollers 16 of the support plane 23 are motor-driven and are driven by a motor 26.

The rollers 16 can intervene to translate the modular moulding unit 4 with respect to the drum unit 9, to replace or assist the aforesaid pushing and pulling device 12.

In the apparatus 1, a foaming station Fs is included that is located outside the drum unit 9 and in a position adjacent to the service and transfer carousel 10.

The foaming station Fs includes one or more mixing heads 11 configured for dispensing the chemically reactive mixture in *"open mould"* mode on an open modular moulding unit 4 or operating in *"closed mould"* mode, i.e. to inject the mixture inside the closed modular moulding units 4.

In the latter case, in the closed modular moulding units 4, suitable injection holes are obtained through which the mixing heads 11 can inject the mixture into the modular moulding units 4.

The mixing head/s 11 can be moved by suitable actuators of hydraulic or electric type etc. to be moved by sliding on suitable guides to near the modular moulding unit 4 before dispensing the reactive mixture.

In another embodiment (not shown), the foaming station is placed on the drum unit 9 and has one or more mixing heads positioned to operate directly on the modular moulding units 4 inserted on the drum unit 9.

In this case, the mixing head/s 11 are configured for injecting the chemically reactive mixture - in *"closed mould"* mode - through the suitable injection holes made in the closed modular moulding units 4 containing the objects to be foamed.

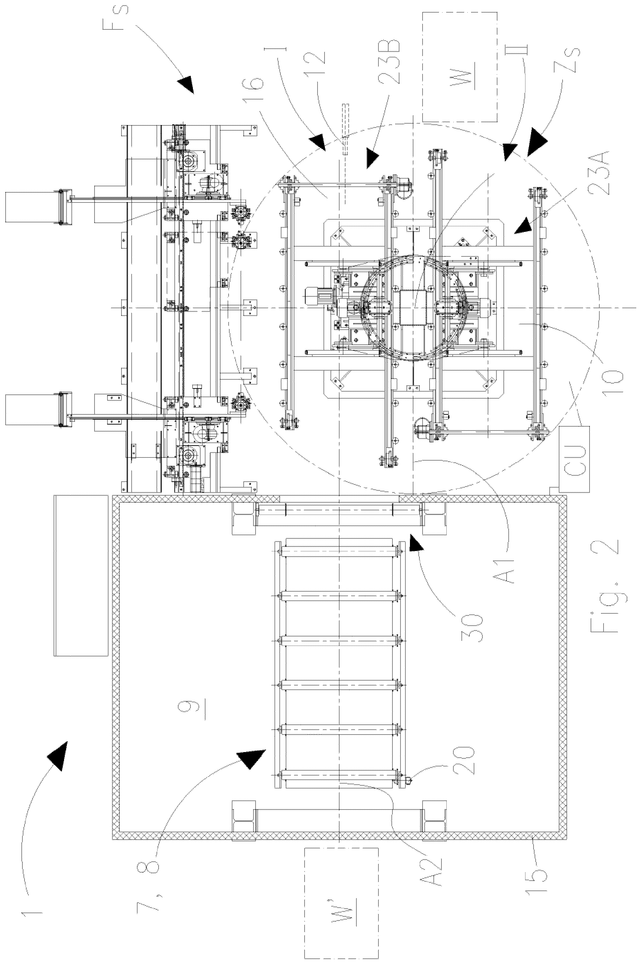

The apparatus 1 is provided with a mould-changing station W (schematized in Figure 2) arranged for enabling one or more modular moulding units 4 to be replaced or only a first half mould 5A and or a second half mould 5B with others of different size/geometry without the need to interrupt the advancement and process of the remaining modular moulding units 4.

The mould-changing station W, in particular, comprises a roller plane suitable for receiving a modular moulding unit 4 on which it is desired to make the change size.

The mould-changing station W, by way of non-limiting example, is placed in the vicinity of the service and transfer carousel 10, for example near the zone-station II. Nevertheless, it is possible to choose to arrange the mould-changing station in other desired zones. For example, a mould-changing station W' can be provided that is placed on an opposite side of the drum unit 9 with respect to the service and transfer carousel 10 alternatively to or in combination with the mould-changing station W that has just been mentioned.

In this manner, in the containing chamber 15, another suitable transit opening (similar but opposite the transit opening 30) can be obtained to enable the modular moulding units 4 to transit between the mould-changing station W' and drum unit 9.

The mould-changing station W' can also act as a station for initializing the foaming process, i.e. for the initial and transitory loading operations of all the modular moulding units 4 on the drum unit 9.

Owing to the presence of the mould-changing station (W and/or W'), in combination with the particularity of having modular moulding units 4 that are completely distinct and separable from the drum unit 9 (i.e. devoid of parts that are permanently connected to the drum unit 9) replacing moulds is made very convenient, easy and versatile to respond to geometry/size change needs for the objects 2, such as in particular doors 2, to be foamed.

In this manner, it is thus possible to manage flexibly and in an optimized manner the increasingly great number of geometric door shapes that are different from one another on the same production line. obtaining high productivity of the apparatus 1 with a maximum reduction of undesired downtime, to permit the required door model change during the sequential production of doors.

The apparatus 1 comprises a control unit CU configured for rotating in an indexed manner the drum unit 9 and for synchronizing the sequential operations of removing the modular moulding units 4 from the drum unit 9, opening and removing the foamed object 2 and loading respective coating elements 3, 3' and possible inserts intended for the subsequent foaming and conveying step, along the advancement path P on the drum unit 9.

To sum up, it is pointed out that in the case of open mould foaming, the operation of mixing the modular moulding unit 4 must occur, together with the operation of closing the moulding unit 4 itself, before the transfer of the latter to the drum unit 9. The other operations can be performed by choice in the zone-station I or in the zone-station II on the basis of evaluation criteria of lesser operating time and/or according to specific needs/necessities/preferences.

Generally speaking, a possible operating sequence that is actuatable with the apparatus 1 involves, with reference to the zone-station I and to the zone-station II, the following operations:
ZONE-STATION I:
   al - entry of already processed closed modular moulding unit 4 coming from
   drum unit 9
   b1 - rotation of the carousel 10
   cl - foaming on modular moulding unit 4 that has just been prepared
   d1 - closure of the modular moulding unit 4
   el - insertion of the modular moulding unit 4 onto the drum unit 9
   f1 - rotation of the drum unit 9.
ZONE-STATION II:
   a2 - opening of the modular moulding unit 4
   b2 - automatic or manual extraction of doors
   c2 - inspection with possible cleaning of the mould
   d2 - automatic or manual loading of doors
   g2 - rotation of the service and transfer carousel 10.

The operation of the apparatus 1 is disclosed concisely below.

Once the transitional process initialization step has terminated, with the loading of the modular moulding units 4 onto the drum unit 9 (for example using the station W') and once a full running condition has been reached, the following procedure is used.

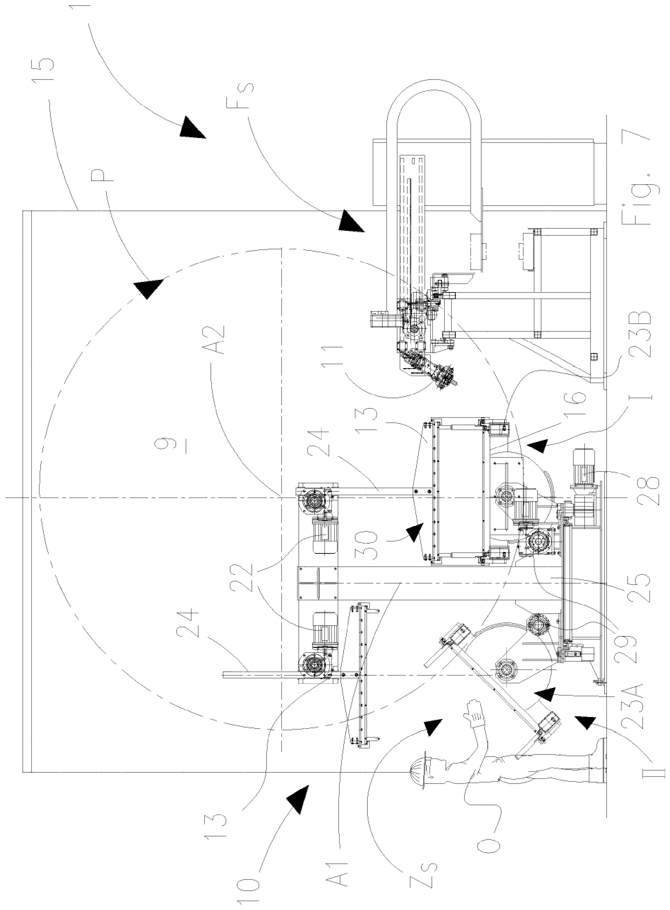

Following an indexed rotation of the drum unit 9, from a first housing cell C1, a first modular moulding unit 4 is extracted that is transferred to the service and transfer carousel 10, in a closed condition, on the positioned part 23 near the foaming zone Fs, i.e. in the zone-station I (for example on the part 23B of the carousel 10, as visible in Figures 2 and 7).

Immediately afterwards, the service and transfer carousel 10 rotates to bring and open the aforesaid first modular moulding unit 4 in the service zone Zs. The carousel 10 can open the modular moulding unit 4 during rotation, so that the latter reaches the service zone Zs that is already in open configuration.

Simultaneously, the aforesaid rotation takes a previous modular moulding unit 4 that is already loaded from the zone-station II to the zone-station I, at the foaming station Fs where it can be closed preventively (in the case of *"closed mould"* foaming), or can first receive the mixture (foamed in *"open mould"*) and is subsequently reclosed and transferred immediately to the housing cell C1 of the drum that remained empty.

The drum unit 9 then rotates by one step and takes a second modular moulding unit 4 to the extraction position where it is transferred from a housing cell C2 to part 23 B (zone-station I) of the carousel 10 and the cycle is repeated.

In the service zone Zs, an operator O (or the possible robotized device) extracts - from said first open modular moulding unit 4 placed on the carousel 10 - the foamed door 2, after which he positions the new coating elements 3, 3' to be sent to a subsequent foaming cycle.

On the half moulds, specific housings and magnets are provided to maintain in a correct position the coating elements 3, 3' or shells.

Upon termination of the preparing and loading operations, the carousel 10 rotates by 180 degrees to move said first modular moulding unit 4 to the foaming zone Fs.

The rotation thus takes the first modular moulding unit 4 - supported by the part 23 A - to the zone-station I near the foaming station Fs and the second modular moulding unit 4 - supported by the part 23 B - opposite the service zone Zs (zone-station 11).

In the zone-station I, the foaming station Fs intervenes to dispense the mixture. The mixture is dispensed in *"open mould"* or also in *"closed mould"* mode - after the half moulds 5A, 5B have been reciprocally closed preliminarily by the corresponding taking member 13.

Once introduction of the reactive mixture has terminated, the first modular moulding unit 4, housed on the part 23 A, is immediately closed if open, and pushed to penetrate - through the transit opening 30 - into the facing housing cell C2 of the drum unit 9.

The transfer of a closed modular moulding unit 4 occurs by the pushing and pulling device 12 and/or by driving the motor-driven rollers 16 of the support plane 13 included in the transfer carousel 10 and subsequently by also driving the pressing rollers 7 and 8 placed on the drum unit 9.

At the end of insertion of the modular moulding unit 4 into the corresponding housing cell C, the drum unit 9 is rotated by a step, so as to position the subsequent housing cell containing another now processed moulding unit 4, at the transit opening 30 to be extracted-by driving the pressing rollers 7, 8 and/or the intervention of the pulling and pushing device 12 - and positioned on the transfer carousel 10.

At this point, the carousel 10 can rotate by 180 degrees in a reverse direction to take said modular moulding unit 4 that has just been removed to the service station Zs to perform thereupon new preparing and loading operations, whilst simultaneously another moulding unit 4 that is already prepared and supplied with the mixture and is waiting on the carousel 10 can be re-inserted into the free housing cell (Cn).

The aforesaid steps are repeated sequentially and in a synchronized manner also owing to the help of the control unit CU that controls the rotation by angular steps of the drum unit 9, the rotation by 180°, in alternating directions, of the service and transfer carousel 10, and driving the other components of the apparatus 1.

All the aforesaid operations are performed in a comparatively short time compared with prior-art systems.

It is pointed out that the modular moulding units 4 are opened and closed far from the zone-station II. This means, in the case of the presence of an operator O assigned to extraction, preparation and loading operations, that any danger of injury being caused to the operator is eliminated. Safety levels in the workplace near the apparatus 1 are thus raised. Owing to the configuration that has just been disclosed, many operations (for example the preparation of a modular moulding unit 4, foaming another modular moulding unit 4 and subsequent insertion thereof into the drum unit 9) occur at least partially simultaneously, thus in masked time, which leads to a significant reduction in cycle time compared with known foaming systems.

As can be seen from what has been disclosed, the apparatus 1 and the corresponding method enable the objects disclosed above to be reached. In particular, great versatility of use and productivity of the apparatus 1 are achieved, which permits refrigerator door foaming time to be reduced.

The apparatus 1 permits extreme flexibility of use, with the possibility of adapting in real time to variable geometric shapes of the half moulds of a door, without having to imply undesired prolonged machine downtime.

The rotatable drum unit 9, equipped with the pressing rollers 7, 8, is structurally simplified and lighter than known apparatuses that are weighed down by complex mould-holder press devices.

The significant structural and functional simplification of the apparatus 1 also translates into greater mechanical reliability and reduced overall dimensions. As the inertia mass is reduced, the apparatus 1 can also operate at higher speeds than prior-art apparatuses.

Owing to the complete separability of the modular moulding units 4 from the drum unit 9, replacement of one or more modular moulding units 4 or only a first half mould 5A and or of a second half mould 5B with others of a different size/geometry without the need to interrupt the advancement and process of the remaining modular moulding units 4 is easy and immediate.

The apparatus 1 thus successfully meets current needs of the refrigerator manufacturing or similar industries, in which the range of models on offer with many different sizes and geometric configurations is increasing constantly.

The apparatus 1 according to the invention is thus able to cater for the sequence of requests coming from the market, making the implementation of a foaming method of the "just in time" type possible.

Consequently, owing to the flexibility and optimation made possible by the apparatus 1 and method according to the invention, there are advantages also from the point of view of the reduction or even elimination of accumulated stocks of single models in the warehouse. It is possible to configure and size the apparatus 1 in a desired manner according to the dimensions/types of the objects to be processed and variations on and/or additions to what has been disclosed above and illustrated in the attached drawings is possible.

## Claims

1. Method for foaming objects (2) with two dimensions that prevail over a third dimension and are provided with outer coating elements (3, 3') between which an in-termediate layer (6) of expanded polyurethane or phenol material is interposed, comprising the steps of:
i). providing a plurality of modular moulding units (4) each consisting of a pair of modular reinforcing and coupling structures (50A, 50B) configured for re-ceiving, or in which there are obtained, respectively a first half mould (5A) and a second half mould (5B) that are mutually couplable/uncouplable, that are suitable for receiving respective coating elements (3, 3') for coating said objects (2) to be foamed and intended to be conveyed along a closed advancement path (P) along which a polymerization and shape stabilization process occurs for the foamed objects (2);
ii). arranging a rotatable drum unit (9) for storing said plurality of modular moulds ing units (4) to be advanced along said closed advancement path (P), said rotat-able drum unit (9) being configured with first rolling means (7) and second rolling means (8) for inserting, positioning and maintaining in a clamped condition said modular moulding units (4),
iii). setting said first rolling means (7) and second rolling means (8) at a reciprocal operating distance (D) so as to define, on said rotatable drum unit (9), a plurality of housing cells (C1, C2, ..., Cn) for respective modular moulding units (4),
iv). arranging, in an outer service zone (Zs) and on a service and transfer carousel (10) placed adjacent to said rotatable drum unit (9), a first modular moulding unit (4) in open configuration, and positioning on the respective first half mould (5A) and second half mould (5B) of said first modular moulding unit (4) respective outer coating elements (3, 3'),
v). completing on said first modular moulding unit (4), in said service zone (Zs), the preliminary preparation and loading operations for a subsequent foaming step that involves introducing into said first modular moulding unit (4), by one or more mixing heads (11), a certain quantity of chemically reactive mixture to obtain the respective foamed object (2),
vi). transferring said first modular moulding unit (4), in closed configuration, from said service zone (Zs) to said rotatable drum unit (9), by inserting said first modular moulding unit (4) into a respective free housing cell (C1) so as to
vii). subject said first modular moulding unit (4) to opposing pressure and clamping actions that are exerted by the respective first rolling means (7) and second rolling means (8) acting on opposite faces of said first modular moulding unit (4), and contrasting from the exterior on said first modular moulding unit (4) the thrusts exerted by the expanding foam by a contrasting action exerted by said first rolling means (7) and second rolling means (8),
viii). rotating by an angular step said rotatable drum unit (9) to advance said modular moulding unit (4) along said closed advancement path (P) and
ix). removing from a second housing cell (C2) a second modular moulding unit (4) that has now reached completion of said closed advancement path (P) along which the polymerization process of said chemically reactive mixture and the shape stabilization of the foamed object (2) enclosed therein occurred, and
x). transferring, by said service and transfer carousel (10), said second modular moulding unit (4) to said service zone (Zs) to permit the operations of opening and removing the foamed object (2) and starting new preparing and loading operations further outer coating elements (3, 3') for foaming a further object (2) whereas a third modular moulding unit (4) that has completed the closed advancement path (P) is moved from said rotatable drum unit (9) to said service and transfer carousel (10), wherein each closed modular moulding unit (4) is inserted into and removed from, the respective housing cell (C1,..Cn) of die drum unit (9) by a pushing and pulling device (12) configured for sliding the modular moulding unit (4) on a roller plane provided on said service and transfer carousel (10), and wherein said first rolling means (7) and said second rolling means (8) comprise idler pressing rollers that are supported in a freely rotatable manner on said drum unit (9).

2. Method according to claim 1, wherein said drum unit (9) is rotated in an indexed manner and for each modular moulding unit (4), the steps of removing the modular moulding unit (4) from said drum unit (9), opening and removing the foamed object (2) and loading respective coating elements (3, 3') to be sent to a subsequent foaming and conveying step, by said drum unit (9), along said advancement path (P) are repeated sequencially.

3. Method according to claim 1 or 2, wherein a feeding step is provided in --1 which said reactive mixture is fed to each modular moulding unit (4) in open configuration, so as to perform mixture dispensing in *"open mould"* mode by one or more mixing heads (11), said feeding step being performed on said service and transfer carousel (10) after loading and positioning the respective coating elements (3, 3') and before closing said modular moulding unit (4) and consequent introduction thereof into a housing cell (C1,..Cn) of said rotatable drum unit (9), in which said feeding step, performed in *"open mould"* condition, pours said quantity of chemically reactive mixture onto one of said first half mould (5A) and second half mould (5B) and, at the end of pouring of said quantity, said first half mould (5A) and second half mould (5B) are coupled reciprocally so as to close the corresponding modular moulding unit (4), after which said closed modular moulding unit (4) is immediately inserted into said drum unit (9).

4. Method according to claim 1 or 2, wherein there is a feeding step for feeding said mixture into each modular moulding unit (4) in closed configuration, so as to perform mixture dispensing in *"closed mould"* mode by one or more mixing heads (11) that are inserted into suitable injection holes obtained in the modular moulding unit (4), said feeding step being performed on said service and transfer carousel (10) after closure of said modular moulding unit (4) following the loading of the respective coating elements (3, 3'), and before said modular moulding unit (4) is inserted into a housing cell (C1,..Cn) of said rotatable drum unit (9).

5. Method according to claim 1 or 2, wherein, after each closed modular moulding unit (4) - containing coating elements (3, 3') - has been inserted into the respective housing cell (C1, ..., Cn). on said drum unit (9). a feeding step is provided for feeding said mixture in *"closed mould"* mode into said modular moulding unit (4) by one or more mixing heads (11) that are inserted into suitable injection holes made in said modular moulding unit (4).

6. Method according to any one of the preceding claims, wherein, once a foamed object (2) is removed from the respective open modular moulding unit (4) and, at the end of the preparing and loading operations new coating elements (3, 3'), said service and transfer carousel (10) is rotated by 180°, in a first rotation direction, around a vertical axis (A1) to prepare the modular moulding unit (4) that has just been loaded for the subsequent mixture feeding steps and subsequent insertion thereof into said drum unit (9), and wherein, once a moulding unit (4) that contains a foamed object (2) has been removed from the drum unit (9) and positioned on said service and transfer carousel (10), said service and transfer carousel (10) is rotated by 180°, in a second rotation direction opposite said first direction, to take said modular moulding unit (4) to the service zone (Zs) where the object (2) can be removed that has just been obtained to permit new preparing and loading operations.

7. Method according to any one of the preceding claims, wherein said first rolling means (7) and/or said second rolling means (8) comprise motor-driven pressing rollers and wherein said motor-driven rollers are driven to perform respectively the insertion and expulsion of each modular moulding unit (4) into/from the corresponding housing cell (C1, ..., Cn) of said drum unit (9).

8. Method according to any one of the preceding claims, wherein said rotatable drum unit (9) rotates around a horizontal rotation axis (A2) and said modular moulding units (4) are loaded onto said rotatable drum unit (9) with the larger dimensions thereof oriented longitudinally parallel to said rotation axis (A2), so as to minimize the overall dimensions and/or enable, with the same overall dimensions, storage of a greater number of modular moulding units (4) on said drum unit (9).

9. Method according to any one of the preceding claims, wherein the first half mould (5A) is uncoupled from the respective half mould (5B) to open the modular moulding unit (4) by taking members (13) of the suction or gripper or equivalent type, and wherein removing finished objects (2) and loading coating elements (3, 3') or shells and/or inserts is performed in an automated manner by a handling device or manually by an operator.

10. Method according to any one of the preceding claims, wherein said drum unit (9) is housed inside a containing chamber (15) provided with a thermostating system, and wherein the modular moulding units (4) that advance along said advancement path (P) are subjected to a heating step to promote the polymerization process.

11. Method according to any one of the preceding claims, wherein the first half mould (5A) and second half mould (5B) of a modular moulding unit(4)are fitted removably to respective reinforcing modular superstructures (50A, 50B) and in which, between each reinforcing superstructure (50A, 50B) and the respective half mould (10A, 10B) a support pallet (14A, 14B) is interposable that permits rapid and easy replacement of the half moulds (5A, 5B) without also having to extract the reinforcing superstructures (50A, 50B).

12. Method according to any one of the preceding claims, wherein, near said service zone (Z_{S}) or other zone adjacent to said drum unit (9), one or more modular moulding units (4) or only said first half mould (5A) or said second half mould (5B) are replaced with others of different size/geometry, without having to stop the advancement and process of the remaining modular moulding units (4).

13. Method according to any one of the preceding claims, wherein said is a polyurethane or phenol mixture and wherein said objects (2) comprise: doors of refrigerators and of refrigerator apparatuses with shell-shaped coating elements (3, 3'), cushions or parts of seats of motor vehicles, walls for a display bench, parts of insulating walls or coatings for a building, panels and other products having two dimensions that prevail over a third dimension devoid of or provided with outer coating elements made of plastics, metal or slabs or sheets that are flat, curved, corrugated or shaped in a desired manner.

14. Method according to any one of the preceding claims, wherein said first rolling means (7) and said second rolling means (8) are so configured as to define rollers having a convex profile to adapt to deflecting actions, or rollers having a coating made of an elastic material such as rubber to exert a better distributed action on said drum unit (9), or so as to define rollers configured with circumferential slots to exert concentrated actions in strengthened parts of the mould.

15. Apparatus for foaming objects (2) with two dimensions that prevail over a third dimension and are provided with outer coating elements (3, 3') between which an intermediate layer (6) of expanded polyurethane or phenol material is interposed, comprising:
- a plurality of modular moulding units (4) each consisting of a pair of modular reinforcing and coupling structures (50A and 50B) configured for receiving, or in which there are obtained, respectively a first half mould (5A) and a second half mould (5B) that are mutually couplable/uncouplable, that are suitable for receiving respective coating elements (3, 3') for coating said objects (2) to be foamed and intended to be conveyed along a closed advancement path (P) along which a polymerization and shape stabilization process occurs for the foamed objects (2);
- an indexed rotatable drum unit (9) configured for storing said plurality of modular moulding units (4) to be advanced along said closed advancement path (P),
- to said rotatable drum unit (9) the first rolling means (7) and second rolling means (8) being fitted for inserting, positioning and maintaining in a clamped condition said modular moulding units (4),
- said first rolling means (7) and second rolling means (8) being arranged at a reciprocal operating distance (D) so as to define, on said rotatable drum unit (9), a plurality of housing cells (C1, ..., Cn) for respective modular moulding units (4),
- said first rolling means (7) and second rolling means (8) being mutually spaced and arranged to exert on the opposite faces of each modular moulding unit (4) opposing pressure and clamping actions to contrast from the exterior the thrusts exerted by the expanding foam inside the modular moulding unit (4),
- a service and transfer carousel (10) adjacent to said drum unit (9), configured for the operations of preparing, loading, foaming in *"open mould"* or in *"closed mould"* mode, closing and insertion of the modular moulding units (4) on said drum unit (9), for the operations of removing the modular moulding units (4) from said drum unit (9) and for the subsequent operations of opening and removing the coated objects (2) from the modular moulding units (4), wherein said apparatus comprises a pushing and pulling device (12) to insert each modular moulding unit (4) into and remove each modular moulding unit (4) from a respective housing cell (C1,..Cn) of the drum unit (9), said pushing and pulling device (12) being configured for sliding the modular moulding unit (4) on support rollers (16) provided on said service and transfer carousel (10), and in which said first rolling means (7) and said second rolling means (8) comprise idling rollers supported in a freely rotatable manner on said drum unit (9), between said service and transfer carousel (10) and said drum unit (9) a further roller plane (17) being interposable for the sliding transit of the modular moulding units (4) between said service and transfer carousel (10) and said drum unit (9).

16. Apparatus according to claim 15, comprising a foaming station (Fs) placed outside said drum unit (9) and adjacent to said service and transfer carousel (10), said foaming station (Fs) including one or more mixing heads (11) configured for dispensing chemically reactive mixture in *"open mould"* mode to an open modular moulding unit (4), or for introducing mixture in *"closed mould"* mode into a closed modular moulding unit (4) through suitable injection holes made in the latter.

17. Apparatus according to claim 15, comprising a foaming station placed on said drum unit (9) and having one or more mixing heads positioned to operate directly on the modular moulding units (4) placed on said drum unit (9), said one or more mixing heads (11) being configured for inserting chemically reactive mixture - in *"closed mould"* mode - through suitable injection holes made in the closed modular moulding unit (4).

18. Apparatus according to any one of claims 15 to 17, wherein said service and transfer carousel (10) is rotatable by 180°, in opposite rotation directions, around a vertical axis (A1) for transferring in sequence a modular moulding unit (4) that has just been prepared from an outer service zone (Zs) to a proximity position (Fs) for foaming and inserting into said drum unit (9), and for transferring a modular moulding unit (4) - containing a foamed object (2) and removed from the drum unit (9) - from the removal zone to the service zone (Zs) to enable the object (2) to be removed that has just been obtained to permit new preparing and loading operations, in which said carousel (10) comprises a support plane (23) defined by two parts (23A, 23B) arranged on opposite sides and mirrored with respect to said vertical axis (A1) and each suitable for hooking, supporting and transferring a respective modular moulding unit (4).

19. Apparatus according to any one of claims 15 to 18, wherein said first rolling means (7) and/or said second rolling means (8) comprise motor-driven rollers that are drivable to perform respectively the insertion and expulsion of each modular moulding unit (4) into/from the corresponding housing cell (Cl1...Cn..) of said drum unit (9), in which all the rollers of a first series of pressing rollers (7) and all the rollers of a second series of pressing rollers (8) are drivable by a single shared motion-transmission element (19) of the belt or chain type, that is wound according to a path of the "zig-zag" type alternately first on a roller of a series and subsequently on a corresponding conjugated roller of the other series of pressing rollers, said motion-transmission element (19) being moved by a motor (20).

20. Apparatus according to any one of claims 15 to 19, wherein said rotatable drum unit (9) is rotatable around a horizontal rotation axis (A2) and is configured for receiving said modular moulding units (4) with the greater dimensions thereof oriented longitudinally parallel to said rotation axis (A2), so as to minimize the overall dimensions and/or enable, with the same overall dimensions, storage of a greater number of modular moulding units (4) on said drum unit (9).

21. Apparatus according to any one of claims 15 to 20, further comprising taking members (13) of the suction or gripper or equivalent type configured for coupling/uncoupling the first half mould (5A) with/from the respective half mould (5B) to open/close the modular moulding units (4).

22. Apparatus according to any one of claims 15 to 21, further comprising a handling device for removing the finished objects (2) and loading and positioning coating elements (3, 3') or shells and/or inserts.

23. Apparatus according to any one of claims 15 to 22, comprising a containing chamber (15) provided with a thermostating system inside which said drum unit (9) is housed, said containing chamber (15) being configured for subjecting said modular moulding units (4), advancing along said advancement path (P), to a heating step to promote the polymerization process.

24. Apparatus according to any one of claims 15 to 23, wherein the first half mould (5A) and the second half mould (5B) of each modular moulding unit (4) are fitted removably on respective reinforcing superstructures (50A, 50B) and wherein, between each reinforcing superstructure (50A, 50B) and the respective half mould (10A, 10B) a support pallet (14A, 14B) is interposable that permits rapid and easy replacement of the half moulds (5A, 5B) without also having to extract the reinforcing superstructures (50A, 50B), and in which said reinforcing superstructures (50A, 50B) include centring and cou-pling elements (51A, 51B) suitable for ensuring correct positioning and reciprocal coupling of the reinforcing superstructures (50A, 50B) in the closed configuration of the modular moulding unit (4).

25. Apparatus according to any one of claims 15 to 24, further comprising a mould-changing station (W; W') that is suitable for enabling one or more modular moulding units (4) or only a first half mould (5A) and/or a second half mould (5B) to be replaced with others of different size/geometry, without having to stop the advancement and process of the remaining modular moulding units (4).

26. Apparatus according to any one of claims 15 to 25, further comprising a control unit (CU) configured for rotating in an indexed manner said drum unit (9) and synchronizing the sequential operations of removing the modular moulding units (4) from said drum unit (9), opening and removing the foamed object (2), loading respective coating elements (3, 3') and possible inserts, for the subsequent foaming and conveying step, along said advancement path (P).

27. Apparatus according to any one of claims 15 to 26, wherein said first rolling means (7) and said second rolling means (8) comprise rollers configured with a convex profile to adapt to deflecting actions, or comprise rollers configured with a coating made of an elastic material such as rubber to exert a better distributed action on said drum unit (9), or comprise rollers configured with circumferential slots distributed to exert concentrated actions on strengthened parts of the mould.

## Patentansprüche

1. Verfahren zum Schäumen von Objekten (2) mit zwei Dimensionen, die sich über eine dritte Dimension erstrecken und mit äußeren Beschichtungselementen (3, 3') bereitgestellt sind, zwischen denen eine Zwischenschicht (6) aus geschäumtem Polyurethan- oder Phenolmaterial eingefügt ist, umfassend die folgenden Schritte:
i). Bereitstellen einer Vielzahl von modularen Formeinheiten (4), die jeweils aus einem Paar von modularen Verstärkungs- und Verbindungsstrukturen (50A, 50B) bestehen, die zur Aufnahme einer ersten Halbform (5A) bzw. einer zweiten Halbform (5B) konfiguriert sind oder in denen eine solche erhalten wird, die gegenseitig koppelbar/entkoppelbar sind, die geeignet sind, jeweilige Beschichtungselemente (3, 3') zum Beschichten der zu schäumenden Objekte (2) aufzunehmen, die dazu bestimmt sind, entlang eines geschlossenen Vorschubweges (P) transportiert zu werden, entlang dessen ein Polymerisations- und Formstabilisierungsprozess für die geschäumten Objekte (2) stattfindet;
ii). Anordnen einer drehbaren Trommeleinheit (9) zum Lagern der Vielzahl von modularen Formeinheiten (4), die entlang des geschlossenen Vorschubweges (P) vorwärts bewegt werden sollen, wobei die drehbare Trommeleinheit (9) mit einem ersten Walzmittel (7) und einem zweiten Walzmittel (8) konfiguriert ist, um die modularen Formeinheiten (4) einzusetzen, zu positionieren und in einem geklemmten Zustand zu halten,
iii). Einstellen des ersten Walzmittels (7) und des zweiten Walzmittels (8) auf einen gegenseitigen Arbeitsabstand (D), um auf der drehbaren Trommeleinheit (9) eine Vielzahl von Gehäusezellen (C1, C2, ..., Cn) für jeweilige modulare Formeinheiten (4) zu definieren,
iv). Anordnen einer ersten modularen Formeinheit (4) in offener Konfiguration in einem äußeren Betriebsbereich (Zs) und auf einem Betriebs- und Transferkarussell (10), das neben der drehbaren Trommeleinheit (9) platziert ist, und Positionieren von jeweiligen äußeren Beschichtungselementen (3, 3') auf der jeweiligen ersten Halbform (5A) und zweiten Halbform (5B) der ersten modularen Formeinheit (4),
v). Fertigstellen, an der ersten modularen Formeinheit (4), im Betriebsbereich (Zs), der einleitenden Vorbereitungs- und Ladevorgänge für einen nachfolgenden Schäumungsschritt, der das Einführen einer bestimmten Menge einer chemisch reaktiven Mischung in die erste modulare Formeinheit (4) durch einen oder mehrere Mischköpfe (11) enthält, um das jeweilige geschäumte Objekt (2) zu erhalten,
vi). Überführen der ersten modularen Formeinheit (4) in geschlossener Konfiguration von dem Betriebsbereich (Zs) zu der drehbaren Trommeleinheit (9) durch Einsetzen der ersten modularen Formeinheit (4) in eine jeweilige freie Gehäusezelle (C1) zum
vii). Unterwerfen der ersten modularen Formeinheit (4) entgegengesetzten Druck- und Klemmwirkungen, die von dem jeweiligen ersten Walzmittel (7) und dem zweiten Walzmittel (8) ausgeübt werden, die auf entgegengesetzte Flächen der ersten modularen Formeinheit (4) wirken, und Kontrastieren der von dem expandierenden Schaumstoff ausgeübten Schübe von außen auf die erste modulare Formeinheit (4) durch eine kontrastierende Wirkung, die von dem ersten Walzmittel (7) und dem zweiten Walzmittel (8) ausgeübt wird,
viii). Drehen der drehbaren Trommeleinheit (9) um einen Winkelschritt, um die modulare Formeinheit (4) entlang des geschlossenen Vorschubweges (P) vorzuschieben, und
ix). Entnehmen einer zweiten modularen Formeinheit (4) aus einer zweiten Gehäusezelle (C2), die nun den geschlossenen Vorschubweg (P), entlang dessen der Polymerisationsprozess der chemisch reaktiven Mischung und die Formstabilisierung des darin eingeschlossenen geschäumten Objekts (2) stattgefunden hat, abgeschlossen hat, und
x). Überführen der zweiten modularen Formeinheit (4) durch das Betriebs- und Transferkarussell (10) zu dem Betriebsbereich (Zs), um die Vorgänge des Öffnens und Entnehmens des geschäumten Objekts (2) und des Beginns neuer Vorbereitungs- und Ladevorgänge weiterer äußerer Beschichtungselemente (3, 3') zum Schäumen eines weiteren Objekts (2) zu ermöglichen, während eine dritte modulare Formeinheit (4), die den geschlossenen Vorschubweg (P) abgeschlossen hat, von der drehbaren Trommeleinheit (9) zu dem Betriebs- und Transferkarussell (10) bewegt wird, wobei jede geschlossene modulare Formeinheit (4) durch eine Schiebe- und Ziehvorrichtung (12), die zum Gleiten der modularen Formeinheit (4) auf einer auf dem Betriebs- und Transferkarussell (10) bereitgestellten Walzenebene konfiguriert ist, in die jeweilige Gehäusezelle (C1, ..., Cn) der Trommeleinheit (9) eingesetzt und daraus entnommen wird, und wobei das erste Walzmittel (7) und das zweite Walzmittel (8) Laufdruckwalzen umfassen, die in einer frei drehbaren Weise auf der Trommeleinheit (9) getragen werden.

2. Verfahren nach Anspruch 1, wobei die Trommeleinheit (9) in einer getakteten Weise gedreht wird und für jede modulare Formeinheit (4) die Schritte des Entnehmens der modularen Formeinheit (4) von der Trommeleinheit (9), des Öffnens und Entnehmens des geschäumten Objekts (2) und des Ladens der jeweiligen Beschichtungselemente (3, 3'), die zu einem nachfolgenden Schäum- und Förderschritt geschickt werden sollen, durch die Trommeleinheit (9) entlang des Vorschubwegs (P) nacheinander wiederholt werden.

3. Verfahren nach Anspruch 1 oder 2, wobei ein Zuführungsschritt bereitgestellt wird, bei dem die reaktive Mischung jeder modularen Formeinheit (4) in offener Konfiguration zugeführt wird, um eine Mischungsabgabe im Modus "offene Form" durch einen oder mehrere Mischköpfe (11) durchzuführen, wobei der Zuführungsschritt auf dem Betriebs- und Transferkarussell (10) nach dem Laden und Positionieren der jeweiligen Beschichtungselemente (3, 3') und vor dem Schließen der modularen Formeinheit (4) und dem anschließenden Einführen derselben in eine Gehäusezelle (C1,..., Cn) der drehbaren Trommeleinheit (9) durchgeführt wird, wobei der Zuführungsschritt, der im Zustand der "offenen Form" durchgeführt wird, die Menge der chemisch reaktiven Mischung auf eine der ersten Halbform (5A) und der zweiten Halbform (5B) gießt und am Ende des Gießens der Menge die erste Halbform (5A) und die zweite Halbform (5B) wechselseitig gekoppelt werden, um die entsprechende modulare Formeinheit (4) zu schließen, wonach die geschlossene modulare Formeinheit (4) unmittelbar in die Trommeleinheit (9) eingesetzt wird.

4. Verfahren nach Anspruch 1 oder 2, wobei es einen Zuführungsschritt zum Zuführen der Mischung in jede modulare Formeinheit (4) in geschlossener Konfiguration gibt, um die Mischungsabgabe im Modus "geschlossene Form" durch einen oder mehrere Mischköpfe (11) durchzuführen, die in geeignete Einspritzlöcher eingesetzt werden, die in der modularen Formeinheit (4) erhalten werden, wobei der Zuführungsschritt auf dem Betriebs- und Transferkarussell (10) nach dem Schließen der modularen Formeinheit (4) im Anschluss an das Laden der jeweiligen Beschichtungselemente (3, 3') und bevor die modulare Formeinheit (4) in eine Gehäusezelle (C1, ... Cn) der drehbaren Trommeleinheit (9) eingesetzt wird, durchgeführt wird.

5. Verfahren nach Anspruch 1 oder 2, wobei, nachdem jede geschlossene modulare Formeinheit (4), die Beschichtungselemente (3, 3') enthält, in die jeweilige Gehäusezelle (C1, ..., Cn) auf der Trommeleinheit (9) eingesetzt wurde, ein Zuführungsschritt bereitgestellt ist, um die Mischung im Modus *"geschlossene Form"* in die modulare Formeinheit (4) durch einen oder mehrere Mischköpfe (11) zuzuführen, die in geeignete, in der modularen Formeinheit (4) hergestellte Einspritzlöcher eingesetzt werden.

6. Verfahren nach einem der vorstehenden Ansprüche, wobei nach der Entnahme eines geschäumten Objekts (2) aus der jeweiligen offenen modularen Formeinheit (4) und nach Beendigung der Vorbereitungs- und Ladevorgänge neuer Beschichtungselemente (3, 3') das Betriebs- und Transferkarussell (10) in einer ersten Drehrichtung um 180° um eine vertikale Achse (A1) gedreht wird, um die soeben beladene modulare Formeinheit (4) für die nachfolgenden Mischungszuführungsschritte und deren anschließendes Einsetzen in die Trommeleinheit (9) vorzubereiten, und wobei, sobald eine Formeinheit (4), die ein geschäumtes Objekt (2) enthält, aus der Trommeleinheit (9) entnommen und auf dem Betriebs- und Transferkarussell (10) positioniert wurde, das Betriebs- und Transferkarussell (10) um 180° in einer zweiten Drehrichtung gedreht wird, die der ersten Richtung entgegengesetzt ist, um die modulare Formeinheit (4) in den Betriebsbereich (Zs) zu bringen, wo das Objekt (2), das gerade erhalten wurde, entnommen werden kann, um neue Vorbereitungs- und Ladevorgänge zu ermöglichen.

7. Verfahren nach einem der vorstehenden Ansprüche, wobei das erste Walzmittel (7) und/oder das zweite Walzmittel (8) motorgetriebene Druckwalzen umfassen und wobei die motorgetriebenen Walzen angetrieben werden, um das Einsetzen bzw. Ausstoßen jeder modularen Formeinheit (4) in/aus der entsprechenden Gehäusezelle (C1, ..., Cn) der Trommeleinheit (9) durchzuführen.

8. Verfahren nach einem der vorstehenden Ansprüche, wobei sich die drehbare Trommeleinheit (9) um eine horizontale Drehachse (A2) dreht und die modularen Formeinheiten (4) auf die drehbare Trommeleinheit (9) geladen werden, wobei deren größere Abmessungen in Längsrichtung parallel zur Drehachse (A2) ausgerichtet sind, um die Gesamtabmessungen zu minimieren und/oder bei gleichen Gesamtabmessungen die Lagerung einer größeren Anzahl modularer Formeinheiten (4) auf der Trommeleinheit (9) zu ermöglichen.

9. Verfahren nach einem der vorstehenden Ansprüche, wobei die erste Halbform (5A) von der jeweiligen Halbform (5B) entkoppelt wird, um die modulare Formeinheit (4) durch Entnahmeelemente (13) des Sauger- oder Greifertyps oder eines gleichwertigen Typs zu öffnen, und wobei die Entnahme von fertigen Objekten (2) und die Beladung mit Beschichtungselementen (3, 3') oder Schalen und/oder Einlagen auf automatisierte Weise durch eine Handhabungsvorrichtung oder manuell durch einen Bediener durchgeführt wird.

10. Verfahren nach einem der vorstehenden Ansprüche, wobei die Trommeleinheit (9) in einer Aufnahmekammer (15) untergebracht ist, die mit einem Thermostatisierungssystem bereitgestellt ist, und wobei die modularen Formeinheiten (4), die sich entlang des Vorschubweges (P) vorwärts bewegen, einem Heizschritt unterzogen werden, um den Polymerisationsprozess zu fördern.

11. Verfahren nach einem der vorstehenden Ansprüche, wobei die erste Halbform (5A) und die zweite Halbform (5B) einer modularen Formeinheit (4) abnehmbar an jeweiligen modularen Verstärkungsaufbauten (50A, 50B) montiert sind und wobei zwischen jedem Verstärkungsaufbau (50A, 50B) und der jeweiligen Halbform (10A, 10B) eine Trägerpalette (14A, 14B) zwischengesetzt werden kann, die ein schnelles und einfaches Auswechseln der Halbformen (5A, 5B) ermöglicht, ohne dass auch die Verstärkungsaufbauten (50A, 50B) ausgebaut werden müssen.

12. Verfahren nach einem der vorstehenden Ansprüche, wobei in der Nähe des Betriebsbereichs (Zs) oder eines anderen, an die Trommeleinheit (9) angrenzenden Bereichs eine oder mehrere modulare Formeinheiten (4) oder nur die erste Halbform (5A) oder die zweite Halbform (5B) durch andere mit anderer Größe/Geometrie ersetzt werden, ohne dass der Vorschub und der Prozess der verbleibenden modularen Formeinheiten (4) gestoppt werden müssen.

13. Verfahren nach einem der vorstehenden Ansprüche, wobei es sich um eine Polyurethan- oder Phenolmischung handelt und wobei die Objekte (2) Folgendes umfassen: Türen von Kühlschränken und von Kühleinrichtungen mit schalenförmigen Beschichtungselementen (3, 3'), Polster oder Teile von Sitzen von Kraftfahrzeugen, Wände für einen Schaukasten, Teile von Isolierwänden oder Beschichtungen für ein Gebäude, Platten und andere Produkte mit zwei Dimensionen, die sich über eine dritte Dimension erstrecken, die frei von oder bereitgestellt mit äußeren Beschichtungselementen aus Kunststoff, Metall oder Platten oder Blechen sind, die flach, gekrümmt, gewellt oder in einer gewünschten Weise geformt sind.

14. Verfahren nach einem der vorstehenden Ansprüche, wobei das erste Walzmittel (7) und das zweite Walzmittel (8) so konfiguriert sind, dass sie Walzen mit einem konvexen Profil, um sich an Ablenkungswirkungen anzupassen, oder Walzen mit einer Beschichtung aus einem elastischen Material wie Gummi definieren, um eine besser verteilte Wirkung auf die Trommeleinheit (9) auszuüben, oder so, dass sie Walzen definieren, die mit Umfangsschlitzen konfiguriert sind, um konzentrierte Wirkungen in verstärkten Teilen der Form auszuüben.

15. Einrichtung zum Schäumen von Objekten (2) mit zwei Dimensionen, die sich über eine dritte Dimension erstrecken und mit äußeren Beschichtungselementen (3, 3') bereitgestellt sind, zwischen denen eine Zwischenschicht (6) aus geschäumtem Polyurethan- oder Phenolmaterial eingefügt ist, umfassend:
- eine Vielzahl von modularen Formeinheiten (4), die jeweils aus einem Paar modularer Verstärkungs- und Verbindungsstrukturen (50A und 50B) bestehen, die zur Aufnahme einer ersten Halbform (5A) bzw. einer zweiten Halbform (5B) konfiguriert sind oder in denen eine solche erhalten wird, die gegenseitig koppelbar/entkoppelbar sind, die geeignet sind, jeweilige Beschichtungselemente (3, 3') zum Beschichten der zu schäumenden Objekte (2) aufzunehmen, die dazu bestimmt sind, entlang eines geschlossenen Vorschubweges (P) transportiert zu werden, entlang dessen ein Polymerisations- und Formstabilisierungsprozess für die geschäumten Objekte (2) stattfindet;
- eine getaktete drehbare Trommeleinheit (9), die zum Lagern der Vielzahl von modularen Formeinheiten (4) konfiguriert ist, die entlang des geschlossenen Vorschubwegs (P) vorwärts bewegt werden sollen,
- wobei an der drehbaren Trommeleinheit (9) das erste Walzmittel (7) und das zweite Walzmittel (8) montiert sind, um die modularen Formeinheiten (4) einzuführen, zu positionieren und in einem geklemmten Zustand zu halten,
- wobei das erste Walzmittel (7) und das zweite Walzmittel (8) in einem gegenseitigen Arbeitsabstand (D) angeordnet sind, um auf der drehbaren Trommeleinheit (9) eine Vielzahl von Gehäusezellen (C1, ..., Cn) für jeweilige modulare Formeinheiten (4) zu definieren,
- wobei das erste Walzmittel (7) und das zweite Walzmittel (8) voneinander beabstandet und so angeordnet sind, dass sie auf die entgegengesetzten Flächen jeder modularen Formeinheit (4) entgegengesetzte Druck- und Klemmwirkungen ausüben, um von außen den durch den expandierenden Schaum im Inneren der modularen Formeinheit (4) ausgeübten Schüben entgegenzuwirken,
- ein Betriebs- und Transferkarussell (10), das an die Trommeleinheit (9) angrenzt und für die Vorgänge des Vorbereitens, des Ladens, des Aufschäumens im Modus *"offene Form"* oder im Modus *"geschlossene Form",* des Schließens und des Einsetzens der modularen Formeinheiten (4) in die Trommeleinheit (9), für die Vorgänge des Entnehmens der modularen Formeinheiten (4) von der Trommeleinheit (9) und für die anschließenden Vorgänge des Öffnens und des Wiederentnehmens der beschichteten Objekte (2) von den modularen Formeinheiten (4) konfiguriert ist, wobei die Einrichtung eine Schiebe- und Ziehvorrichtung (12) umfasst, um jede modulare Formeinheit (4) in eine jeweilige Gehäusezelle (C1, ... Cn) der Trommeleinheit (9) einzusetzen und jede modulare Formeinheit (4) aus dieser zu entnehmen, wobei die Schiebe- und Ziehvorrichtung (12) konfiguriert ist, um die modulare Formeinheit (4) auf Tragwalzen (16) zu schieben, die auf dem Betriebs- und Transferkarussell (10) bereitgestellt sind, und wobei das erste Walzmittel (7) und das zweite Walzmittel (8) Leerlaufwalzen umfassen, die frei drehbar auf der Trommeleinheit (9) getragen werden, wobei zwischen dem Betriebs- und Transferkarussell (10) und der Trommeleinheit (9) eine weitere Walzenebene (17) für den gleitenden Durchgang der modularen Formeinheiten (4) zwischen dem Betriebs- und Transferkarussell (10) und der Trommeleinheit (9) zwischengesetzt werden kann.

16. Einrichtung nach Anspruch 15, umfassend eine Schäumstation (Fs), die außerhalb der Trommeleinheit (9) und angrenzend an das Betriebs- und Transferkarussell (10) platziert ist, wobei die Schäumstation (Fs) einen oder mehrere Mischköpfe (11) beinhaltet, die zur Abgabe einer chemisch reaktiven Mischung im Modus *"offene Form"* an eine offene modulare Formeinheit (4) oder zum Einführen einer Mischung im Modus *"geschlossene Form"* in eine geschlossene modulare Formeinheit (4) durch geeignete Einspritzlöcher in der letzteren konfiguriert sind.

17. Einrichtung nach Anspruch 15, umfassend eine Schäumstation, die auf der Trommeleinheit (9) platziert ist und einen oder mehrere Mischköpfe aufweist, die so positioniert sind, dass sie direkt auf den modularen Formeinheiten (4) betrieben werden, die auf der Trommeleinheit (9) platziert sind, wobei der eine oder die mehreren Mischköpfe (11) konfiguriert sind, um eine chemisch reaktive Mischung im Modus *"geschlossene Form"* durch geeignete Einspritzlöcher, die in der geschlossenen modularen Formeinheit (4) hergestellt wurden, einzusetzen.

18. Einrichtung nach einem der Ansprüche 15 bis 17, wobei das Betriebs- und Transferkarussell (10) um 180° in entgegengesetzten Drehrichtungen um eine vertikale Achse (A1) drehbar ist, um eine modulare Formeinheit (4), die gerade vorbereitet wurde, nacheinander von einem äußeren Betriebsbereich (Zs) in eine Nahposition (Fs) zum Schäumen und Einsetzen in die Trommeleinheit (9) zu überführen, und um eine modulare Formeinheit (4), die ein geschäumtes Objekt (2) enthält und aus der Trommeleinheit (9) entnommen wurde, aus dem Entnahmebereich in den Betriebsbereich (Zs) zu überführen, damit das soeben erhaltene Objekt (2) entnommen werden kann, um neue Vorbereitungs- und Ladevorgänge zu ermöglichen, wobei das Karussell (10) eine Trägerebene (23) umfasst, die durch zwei Teile (23A, 23B) definiert ist, die auf entgegengesetzten Seiten angeordnet und in Bezug auf die vertikale Achse (A1) gespiegelt sind und jeweils geeignet sind, eine jeweilige modulare Formeinheit (4) einzuhängen, zu tragen und zu überführen.

19. Einrichtung nach einem der Ansprüche 15 bis 18, wobei das erste Walzmittel (7) und/oder das zweite Walzmittel (8) motorgetriebene Walzen umfassen, die antreibbar sind, um das Einsetzen bzw. Ausstoßen jeder modularen Formeinheit (4) in/aus der entsprechenden Gehäusezelle (C1, ..., Cn ...) der Trommeleinheit (9) durchzuführen, wobei alle Walzen einer ersten Reihe von Presswalzen (7) und alle Walzen einer zweiten Reihe von Presswalzen (8) durch ein einziges gemeinsames Bewegungsübertragungselement (19) vom Band- oder Kettentyp antreibbar sind, das gemäß einer Bahn vom "Zick-Zack"-Typ abwechselnd zuerst auf eine Walze einer Reihe und anschließend auf eine entsprechende konjugierte Walze der anderen Reihe von Presswalzen gewickelt ist, wobei das Bewegungsübertragungselement (19) durch einen Motor (20) bewegt wird.

20. Einrichtung nach einem der Ansprüche 15 bis 19, wobei die drehbare Trommeleinheit (9) um eine horizontale Drehachse (A2) drehbar ist und zur Aufnahme der modularen Formeinheiten (4) konfiguriert ist, deren größere Abmessungen in Längsrichtung parallel zur Drehachse (A2) ausgerichtet sind, um die Gesamtabmessungen zu minimieren und/oder bei gleichen Gesamtabmessungen die Lagerung einer größeren Anzahl modularer Formeinheiten (4) auf der Trommeleinheit (9) zu ermöglichen.

21. Einrichtung nach einem der Ansprüche 15 bis 20, weiter umfassend Entnahmeelemente (13) des Sauger- oder Greifertyps oder eines gleichwertigen Typs, die zum Koppeln/Entkoppeln der ersten Halbform (5A) mit/von der jeweiligen Halbform (5B) konfiguriert sind, um die modularen Formeinheiten (4) zu öffnen/zu schließen.

22. Einrichtung nach einem der Ansprüche 15 bis 21, weiter umfassend eine Handhabungsvorrichtung zur Entnahme der fertigen Objekte (2) und zum Laden und Positionieren von Beschichtungselementen (3, 3') oder Schalen und/oder Einlagen.

23. Einrichtung nach einem der Ansprüche 15 bis 22, umfassend eine Aufnahmekammer (15), die mit einem Thermostatisierungssystem bereitgestellt ist, in dem die Trommeleinheit (9) untergebracht ist, wobei die Aufnahmekammer (15) konfiguriert ist, um die modularen Formeinheiten (4), die sich entlang des Vorschubweges (P) vorwärts bewegen, einem Heizschritt zu unterziehen, um den Polymerisationsprozess zu fördern.

24. Einrichtung nach einem der Ansprüche 15 bis 23, wobei die erste Halbform (5A) und die zweite Halbform (5B) jeder modularen Formeinheit (4) abnehmbar auf jeweiligen Verstärkungsaufbauten (50A, 50B) montiert sind und wobei zwischen jedem Verstärkungsaufbau (50A, 50B) und der jeweiligen Halbform (10A, 10B) eine Trägerpalette (14A, 14B) zwischengesetzt werden kann, die ein schnelles und einfaches Auswechseln der Halbformen (5A, 5B) ermöglicht, ohne dass auch die Verstärkungsaufbauten (50A, 50B) ausgebaut werden müssen, und wobei die Verstärkungsaufbauten (50A, 50B) Zentrier- und Kopplungselemente (51A, 51B) beinhalten, die geeignet sind, eine korrekte Positionierung und gegenseitige Kopplung des Verstärkungsaufbaus (50A, 50B) in geschlossener Konfiguration der modularen Formeinheit (4) sicherzustellen.

25. Einrichtung nach einem der Ansprüche 15 bis 24, weiter umfassend eine Formwechselstation (W; W'), die geeignet ist, eine oder mehrere modulare Formeinheiten (4) oder nur eine erste Halbform (5A) und/oder eine zweite Halbform (5B) gegen andere mit anderer Größe/Geometrie auszutauschen, ohne den Vorschub und den Prozess der verbleibenden modularen Formeinheiten (4) stoppen zu müssen.

26. Einrichtung nach einem der Ansprüche 15 bis 25, weiter umfassend eine Steuereinheit (CU), die zum Drehen der Trommeleinheit (9) in einer getakteten Weise und zum Synchronisieren der aufeinanderfolgenden Vorgänge des Entnehmens der modularen Formeinheiten (4) von der Trommeleinheit (9), des Öffnens und Entnehmens des geschäumten Objekts (2), des Ladens jeweiliger Beschichtungselemente (3, 3') und möglicher Einsätze für den nachfolgenden Schäum- und Förderschritt entlang des Vorschubwegs (P) konfiguriert ist.

27. Einrichtung nach einem der Ansprüche 15 bis 26, wobei das erste Walzmittel (7) und das zweite Walzmittel (8) Walzen umfassen, die mit einem konvexen Profil konfiguriert sind, um sich an Ablenkungswirkungen anzupassen, oder Walzen umfassen, die mit einer Beschichtung aus einem elastischen Material wie Gummi konfiguriert sind, um eine besser verteilte Wirkung auf die Trommeleinheit (9) auszuüben, oder Walzen umfassen, die mit umlaufenden Schlitzen konfiguriert sind, die verteilt sind, um konzentrierte Wirkungen auf verstärkte Teile der Form auszuüben.

## Revendications

1. Procédé de moussage d'objets (2) présentant deux dimensions qui prédominent sur une troisième dimension et qui sont dotés d'éléments de revêtement extérieurs (3, 3') entre lesquels est interposée une couche intermédiaire (6) de matériau de polyuréthane ou phénolique expansé, comprenant les étapes de :
i). fourniture d'une pluralité d'unités de moulage modulaires (4) consistant chacune en une paire de structures modulaires de renforcement et de couplage (50A, 50B) configurées pour recevoir, ou dans lesquelles sont obtenus, respectivement un premier demi-moule (5A) et un second demi-moule (5B) qui peuvent mutuellement être couplés/désaccouplés, qui sont appropriés pour recevoir des éléments de revêtement respectifs (3, 3') pour recouvrir lesdits objets (2) à mousser et destinés à être transportés le long d'un trajet d'avance fermé (P) le long duquel se produit un processus de polymérisation et de stabilisation de forme pour les objets moussés (2) ;
ii). agencement d'une unité de tambour rotatif (9) pour stocker ladite pluralité d'unités de moulage modulaires (4) à faire avancer le long dudit trajet d'avance fermé (P), ladite unité de tambour rotatif (9) étant configurée avec des premiers moyens de roulement (7) et des seconds moyens de roulement (8) pour insérer, positionner et maintenir dans un état serré lesdites unités de moulage modulaires (4),
iii). réglage desdits premiers moyens de roulement (7) et desdits seconds moyens de roulement (8) à une distance de fonctionnement réciproque (D) de manière à définir, sur ladite unité de tambour rotatif (9), une pluralité de cellules de logement (C1, C2, ..., Cn) pour des unités de moulage modulaires (4) respectives,
iv). agencement, dans une zone de service externe (Zs) et sur un carrousel de service et de transfert (10) placé adjacent à ladite unité de tambour rotatif (9), d'une première unité de moulage modulaire (4) en configuration ouverte, et le positionnement sur le premier demi-moule (5A) et le second demi-moule (5B) respectifs de ladite première unité de moulage modulaire (4) d'éléments de revêtement extérieurs (3, 3') respectifs,
v). achèvement sur ladite première unité modulaire de moulage (4), dans ladite zone de service (Zs), des opérations préliminaires de préparation et de chargement en vue d'une étape de moussage ultérieure qui consiste à introduire dans ladite première unité modulaire de moulage (4), par une ou plusieurs têtes de mélange (11), une certaine quantité de mélange chimiquement réactif pour obtenir l'objet moussé (2) respectif,
vi). transfert de ladite première unité de moulage modulaire (4), en configuration fermée, de ladite zone de service (Zs) à ladite unité de tambour rotatif (9), en insérant ladite première unité de moulage modulaire (4) dans une cellule de logement libre (C1) respective de manière à
vii). soumettre ladite première unité de moulage modulaire (4) à des actions de pression opposée et de serrage qui sont exercées par les premiers moyens de roulement (7) et les seconds moyens de roulement (8) respectifs agissant sur des faces opposées de ladite première unité de moulage modulaire (4), et s'opposant depuis l'extérieur sur ladite première unité de moulage modulaire (4) aux poussées exercées par la mousse en expansion par une action opposée exercée par lesdits premiers moyens de roulement (7) et lesdits seconds moyens de roulement (8),
viii). rotation d'un pas angulaire de ladite unité de tambour rotatif (9) pour faire avancer ladite unité de moulage modulaire (4) le long dudit trajet d'avance fermé (P) et
ix). retrait à partir d'une seconde cellule de logement (C2) d'une deuxième unité de moulage modulaire (4) qui a maintenant atteint la fin dudit trajet d'avance fermé (P) le long duquel le processus de polymérisation dudit mélange chimiquement réactif et la stabilisation de forme de l'objet moussé (2) enfermé dans celui-ci ont eu lieu, et
x). transfert, par ledit carrousel de service et de transfert (10), de ladite deuxième unité modulaire de moulage (4) vers ladite zone de service (Zs) pour permettre les opérations d'ouverture et de retrait de l'objet moussé (2) et lancement de nouvelles opérations de préparation et de chargement d'éléments de revêtement extérieurs supplémentaires (3, 3') pour faire mousser un objet supplémentaire (2), en même temps qu'une troisième unité de moulage modulaire (4) qui a terminé le trajet d'avance fermé (P) est déplacée de ladite unité de tambour rotatif (9) audit carrousel de service et de transfert (10), dans lequel chaque unité de moulage modulaire (4) fermée est insérée dans et retirée de la cellule de logement (C1,..Cn) respective de l'unité de tambour (9) par un dispositif de poussée et de traction (12) configuré pour faire glisser l'unité de moulage modulaire (4) sur un plan de rouleaux fourni sur ledit carrousel de service et de transfert (10), et dans lequel lesdits premiers moyens de roulement (7) et lesdits seconds moyens de roulement (8) comprennent des rouleaux presseurs non commandés qui sont supportés de manière librement rotative sur ladite unité de tambour (9).

2. Procédé selon la revendication 1, dans lequel ladite unité de tambour (9) est mise en rotation de manière indexée et pour chaque unité de moulage modulaire (4), les étapes de retrait de l'unité de moulage modulaire (4) à partir de ladite unité de tambour (9), d'ouverture et de retrait de l'objet moussé (2) et de chargement des éléments de revêtement (3, 3') respectifs à envoyer vers une étape ultérieure de moussage et de transport, par ladite unité de tambour (9), le long dudit trajet d'avance (P), sont répétées séquentiellement.

3. Procédé selon la revendication 1 ou 2, dans lequel une étape d'alimentation est fournie dans laquelle ledit mélange réactif est alimenté vers chaque unité de moulage modulaire (4) dans une configuration ouverte, de manière à effectuer une distribution de mélange en mode « *moule ouvert* » par une ou plusieurs têtes de mélange (11), ladite étape d'alimentation étant effectuée sur ledit carrousel de service et de transfert (10) après le chargement et le positionnement des éléments de revêtement (3, 3') respectifs et avant la fermeture de ladite unité de moulage modulaire (4) et l'introduction consécutive de celle-ci dans une cellule de logement (C1,..Cn) de ladite unité de tambour rotatif (9), dans laquelle ladite étape d'alimentation, effectuée dans un état de « *moule ouvert* », verse ladite quantité de mélange chimiquement réactif sur l'un desdits premier demi-moule (5A) et second demi-moule (5B) et, à la fin du versement de ladite quantité, lesdits premier demi-moule (5A) et second demi-moule (5B) sont couplés réciproquement de manière à fermer l'unité de moulage modulaire (4) correspondante, après quoi ladite unité de moulage modulaire (4) fermée est immédiatement insérée dans ladite unité de tambour (9).

4. Procédé selon la revendication 1 ou 2, dans lequel est présente une étape d'alimentation pour alimenter en dit mélange chaque unité de moulage modulaire (4) en configuration fermée, de manière à effectuer en distribution de mélange en mode *« moule fermé* » par une ou plusieurs têtes de mélange (11) qui sont insérées dans des trous d'injection appropriés obtenus dans l'unité de moulage modulaire (4), ladite étape d'alimentation étant réalisée sur ledit carrousel de service et de transfert (10) après fermeture de ladite unité de moulage modulaire (4) suite au chargement des éléments de revêtement (3, 3') respectifs, et avant que ladite unité de moulage modulaire (4) ne soit insérée dans une cellule de logement (C1,..Cn) de ladite unité de tambour rotatif (9).

5. Procédé selon la revendication 1 ou 2, dans lequel après que chaque unité de moulage modulaire (4) fermée, contenant des éléments de revêtement (3, 3'), a été insérée dans la cellule de logement (C1,..., Cn) respective, sur ladite unité de tambour (9), une étape d'alimentation est fournie pour alimenter en dit mélange en mode « *moule fermé* » ladite unité de moulage modulaire (4) par une ou plusieurs têtes de mélange (11) qui sont insérées dans des trous d'injection appropriés réalisés dans ladite unité de moulage modulaire (4).

6. Procédé selon l'une quelconque des revendications précédentes, dans lequel, une fois qu'un objet moussé (2) est retiré de l'unité de moulage modulaire (4) ouverte respective et, à la fin des opérations de préparation et de chargement de nouveaux éléments de revêtement (3, 3'), ledit carrousel de service et de transfert (10) est tourné de 180°, dans un premier sens de rotation, autour d'un axe vertical (A1) pour préparer l'unité de moulage modulaire (4) qui vient d'être chargée pour les étapes ultérieures d'alimentation en mélange et l'insertion ultérieure de celle-ci dans ladite unité de tambour (9), et dans lequel, une fois qu'une unité de moulage (4) qui contient un objet moussé (2) a été retirée de l'unité de tambour (9) et positionnée sur ledit carrousel de service et de transfert (10), ledit carrousel de service et de transfert (10) tourne de 180°, dans un second sens de rotation opposé audit premier sens, pour amener ladite unité de moulage modulaire (4) vers la zone de service (Zs) où l'objet (2) qui vient d'être obtenu peut être retiré pour permettre de nouvelles opérations de préparation et de chargement.

7. Procédé selon l'une quelconque des revendications précédentes, dans lequel lesdits premiers moyens de roulement (7) et/ou lesdits seconds moyens de roulement (8) comprennent des rouleaux presseurs entraînés par moteur et dans lequel lesdits rouleaux entraînés par moteur sont entraînés pour effectuer respectivement l'insertion et l'expulsion de chaque unité de moulage modulaire (4) dans/depuis la cellule de logement (C1, ..., Cn) correspondante de ladite unité de tambour (9).

8. Procédé selon l'une quelconque des revendications précédentes, dans lequel ladite unité de tambour rotatif (9) tourne autour d'un axe de rotation horizontal (A2) et lesdites unités de moulage modulaires (4) sont chargées sur ladite unité de tambour rotatif (9) avec les plus grandes dimensions de celles-ci orientées longitudinalement parallèlement audit axe de rotation (A2), de manière à réduire au minimum l'encombrement et/ou à permettre, avec le même encombrement, le stockage d'un plus grand nombre d'unités de moulage modulaires (4) sur ladite unité de tambour (9).

9. Procédé selon l'une quelconque des revendications précédentes, dans lequel le premier demi-moule (5A) est désaccouplé du demi-moule (5B) respectif pour ouvrir l'unité de moulage modulaire (4) en prenant des organes (13) du type d'aspiration, de préhension ou équivalent, et dans lequel le retrait d'objets finis (2) et le chargement d'éléments de revêtement (3, 3') ou de coques et/ou d'inserts sont réalisés de manière automatisée par un dispositif de manutention ou manuellement par un opérateur.

10. Procédé selon l'une quelconque des revendications précédentes, dans lequel ladite unité de tambour (9) est logée à l'intérieur d'une chambre de réception (15) dotée d'un système de thermostatisation, et dans lequel les unités de moulage modulaires (4) qui avancent le long dudit trajet d'avance (P) sont soumis à une étape de chauffage pour favoriser le processus de polymérisation.

11. Procédé selon l'une quelconque des revendications précédentes, dans lequel le premier demi-moule (5A) et le second demi-moule (5B) d'une unité de moulage modulaire (4) sont montés de manière amovible sur des superstructures modulaires de renforcement (50A, 50B) respectives et dans lesquelles, entre chaque superstructure de renforcement (50A, 50B) et le demi-moule (10A, 10B) respectif peut être interposée une palette de support (14A, 14B) qui permet un remplacement rapide et facile des demi-moules (5A, 5B) sans avoir également à extraire les superstructures de renforcement (50A, 50B).

12. Procédé selon l'une quelconque des revendications précédentes, dans lequel, à proximité de ladite zone de service (Zs) ou d'une autre zone adjacente à ladite unité de tambour (9), une ou plusieurs unités de moulage modulaires (4), ou seulement ledit premier demi-moule (5A) ou ledit second demi-moule (5B) sont remplacés par d'autres de différente taille/géométrie, sans avoir à arrêter l'avance et le processus des unités de moulage modulaires (4) restantes.

13. Procédé selon l'une quelconque des revendications précédentes, dans lequel ledit mélange est un mélange de polyuréthane ou de phénol et dans lequel lesdits objets (2) comprennent : des portes de réfrigérateurs et d'appareils frigorifiques avec des éléments de revêtement en forme de coque (3, 3'), des coussins ou des parties de sièges de véhicules à moteurs, des parois pour un présentoir, des parties de murs isolants ou de revêtements pour un bâtiment, des panneaux et autres produits présentant deux dimensions qui prédominent sur une troisième dimension dépourvus ou dotés d'éléments de revêtement extérieurs en matière plastique, métal ou plaques ou feuilles qui sont plates, courbées, ondulées ou mises en forme de la manière souhaitée.

14. Procédé selon l'une quelconque des revendications précédentes, dans lequel lesdits premiers moyens de roulement (7) et lesdits seconds moyens de roulement (8) sont configurés de manière à définir des rouleaux présentant un profil convexe pour s'adapter à des actions de déformation, ou des rouleaux présentant un revêtement en un matériau élastique tel que du caoutchouc pour exercer une action mieux répartie sur ladite unité de tambour (9), ou de manière à définir des rouleaux configurés avec des fentes circonférentielles pour exercer des actions concentrées dans des parties renforcées du moule.

15. Appareil de moussage d'objets (2) présentant deux dimensions qui prédominent sur une troisième dimension et qui sont dotés d'éléments de revêtement extérieurs (3, 3') entre lesquels est interposée une couche intermédiaire (6) de matériau de polyuréthane ou phénolique expansé, comprenant :
- une pluralité d'unités de moulage modulaires (4) consistant chacune en une paire de structures modulaires de renforcement et de couplage (50A et 50B) configurées pour recevoir, ou dans lesquelles sont obtenus, respectivement un premier demi-moule (5A) et un second demi-moule (5B) qui peuvent mutuellement être couplés/désaccouplés, qui sont appropriés pour recevoir des éléments de revêtement (3, 3') respectifs pour recouvrir lesdits objets (2) à mousser et destinés à être transportés le long d'un trajet d'avance fermé (P) le long duquel se produit un processus de polymérisation et de stabilisation de forme pour les objets moussés (2) ;
- une unité de tambour rotatif indexée (9) configurée pour stocker ladite pluralité d'unités de moulage modulaires (4) à faire avancer le long dudit trajet d'avance fermé (P),
- sur ladite unité de tambour rotatif (9), les premiers moyens de roulement (7) et les seconds moyens de roulement (8) étant installés pour insérer, positionner et maintenir dans un état serré lesdites unités de moulage modulaires (4),
- lesdits premiers moyens de roulement (7) et lesdits seconds moyens de roulement (8) étant agencés à une distance de fonctionnement réciproque (D) de manière à définir, sur ladite unité de tambour rotatif (9), une pluralité de cellules de logement (C1, ..., Cn) pour des unités de moulage modulaires (4) respectives,
- lesdits premiers moyens de roulement (7) et lesdits seconds moyens de roulement (8) étant mutuellement espacés et agencés pour exercer sur les faces opposées de chaque unité de moulage modulaire (4) des actions de pression opposée et de serrage pour s'opposer depuis l'extérieur aux poussées exercées par la mousse en expansion à l'intérieur de l'unité de moulage modulaire (4),
- un carrousel de service et de transfert (10) adjacent à ladite unité de tambour (9), configuré pour les opérations de préparation, chargement, moussage en mode « *moule ouvert* » ou en mode « *moule fermé* », fermeture et insertion des unités de moulage modulaires (4) sur ladite unité de tambour (9), pour les opérations de retrait des unités de moulage modulaires (4) à partir de ladite unité de tambour (9) et pour les opérations ultérieures d'ouverture et de retrait des objets revêtus (2) à partir des unités de moulage modulaires (4), dans lequel ledit appareil comprend un dispositif de poussée et de traction (12) pour insérer chaque unité de moulage modulaire (4) dans et retirer chaque unité de moulage modulaire (4) d'une cellule de logement respective (C1,..Cn) de l'unité de tambour (9), ledit dispositif de poussée et de traction (12) étant configuré pour faire glisser l'unité de moulage modulaire (4) sur des rouleaux de support (16) fournis sur ledit carrousel de service et de transfert (10), et dans lequel lesdits premiers moyens de roulement (7) et lesdits seconds moyens de roulement (8) comprennent des rouleaux non commandés supportés de manière libre en rotation sur ladite unité de tambour (9), entre ledit carrousel de service et de transfert (10) et ladite unité de tambour (9), un plan de rouleaux (17) supplémentaire pouvant être interposé pour le transit coulissant des unités de moulage modulaires (4) entre ledit carrousel de service et de transfert (10) et ladite unité de tambour (9).

16. Appareil selon la revendication 15, comprenant un poste de moussage (Fs) placé à l'extérieur de ladite unité de tambour (9) et adjacent audit carrousel de service et de transfert (10), ledit poste de moussage (Fs) incluant une ou plusieurs têtes de mélange (11) configurées pour distribuer un mélange chimiquement réactif en mode *« moule ouvert* » à une unité de moulage modulaire (4) ouverte, ou pour introduire un mélange en mode « *moule fermé* » dans une unité de moulage modulaire (4) fermée à travers des trous d'injection appropriés ménagés dans cette dernière.

17. Appareil selon la revendication 15, comprenant un poste de moussage placé sur ladite unité de tambour (9) et présentant une ou plusieurs têtes de mélange positionnées pour fonctionner directement sur les unités de moulage modulaires (4) placées sur ladite unité de tambour (9), lesdites une ou plusieurs des têtes de mélange (11) étant configurées pour insérer un mélange chimiquement réactif - en mode « moule fermé »-à travers des trous d'injection appropriés ménagés dans l'unité de moulage modulaire (4) fermée.

18. Appareil selon l'une quelconque des revendications 15 à 17, dans lequel ledit carrousel de service et de transfert (10) peut tourner sur 180°, dans des sens de rotation opposés, autour d'un axe vertical (A1) pour transférer en séquence une unité de moulage modulaire (4) qui vient juste d'être préparée d'une zone de service externe (Zs) à une position de proximité (Fs) pour le moussage et l'insertion dans ladite unité de tambour (9), et pour transférer une unité de moulage modulaire (4) - contenant un objet moussé (2) et retiré de l'unité de tambour (9) - de la zone de prélèvement à la zone de service (Zs) pour permettre le retrait de l'objet (2) qui vient d'être obtenu pour permettre de nouvelles opérations de préparation et de chargement, dans lequel ledit carrousel (10) comprend un plan de support (23) défini par deux parties (23A, 23B) agencées sur des côtés opposés et en miroir par rapport audit axe vertical (A1) et chacune étant adaptée pour accrocher, supporter et transférer une unité de moulage modulaire (4) respective.

19. Appareil selon l'une quelconque des revendications 15 à 18, dans lequel lesdits premiers moyens de roulement (7) et/ou lesdits seconds moyens de roulement (8) comprennent des rouleaux entraînés par moteur qui peuvent être entraînés pour effectuer respectivement l'insertion et l'expulsion de chaque unité de moulage modulaire (4) dans/depuis la cellule de logement (C1, ..., Cn..) correspondante de ladite unité de tambour (9), dans lequel tous les rouleaux d'une première série de rouleaux presseurs (7) et tous les rouleaux d'une seconde série de rouleaux presseurs (8) peuvent être entraînés par un élément de transmission de mouvement partagé unique (19), du type courroie ou chaîne, qui s'enroule selon un trajet du type « en zigzag » alternativement d'abord sur un rouleau d'une série et ensuite sur un rouleau correspondant conjugué de l'autre série de rouleaux presseurs, ledit élément de transmission de mouvement (19) étant mis en mouvement par un moteur (20).

20. Appareil selon l'une quelconque des revendications 15 à 19, dans lequel ladite unité de tambour rotatif (9) peut tourner autour d'un axe de rotation horizontal (A2) et est configurée pour recevoir lesdites unités de moulage modulaires (4), dont les plus grandes dimensions sont orientées longitudinalement parallèlement audit axe de rotation (A2), de manière à réduire au minimum l'encombrement et/ou à permettre, avec le même encombrement, le stockage d'un plus grand nombre d'unités de moulage modulaires (4) sur ladite unité de tambour (9).

21. Appareil selon l'une quelconque des revendications 15 à 20, comprenant en outre des organes de saisie (13) du type par aspiration ou préhension ou équivalent configurés pour coupler/désaccoupler le premier demi-moule (5A) avec/depuis le demi-moule respectif (5B) pour ouvrir/fermer les unités de moulage modulaires (4).

22. Appareil selon l'une quelconque des revendications 15 à 21, comprenant en outre un dispositif de manipulation pour retirer les objets finis (2) et charger et positionner des éléments de revêtement (3, 3') ou des coques et/ou des inserts.

23. Appareil selon l'une quelconque des revendications 15 à 22, comprenant une chambre de réception (15) dotée d'un système de thermostatisation à l'intérieur duquel ladite unité de tambour (9) est logée, ladite chambre de réception (15) étant configurée pour soumettre lesdites unités de moulage modulaires (4), avançant le long dudit trajet d'avance (P), à une étape de chauffage pour favoriser le processus de polymérisation.

24. Appareil selon l'une quelconque des revendications 15 à 23, dans lequel le premier demi-moule (5A) et le second demi-moule (5B) de chaque unité de moulage modulaire (4) sont montés de manière amovible sur des superstructures de renforcement (50A, 50B) respectives et dans lesquelles, entre chaque superstructure de renforcement (50A, 50B) et le demi-moule (10A, 10B) respectif peut être interposée une palette de support (14A, 14B) qui permet un remplacement rapide et facile des demi-moules (5A, 5B) sans avoir également à extraire les superstructures de renforcement (50A, 50B), et dans lequel lesdites superstructures de renforcement (50A, 50B) incluent des éléments de centrage et de couplage (51A, 51B) appropriés pour assurer un positionnement correct et un couplage réciproque de la superstructure de renforcement (50A, 50B) dans la configuration fermée de l'unité de moulage modulaire (4).

25. Appareil selon l'une quelconque des revendications 15 à 24, comprenant en outre un poste de changement de moule (W ; W') qui est approprié pour permettre à une ou plusieurs unités de moulage modulaires (4) ou seulement à un premier demi-moule (5A) et/ou à un second demi-moule (5B) d'être remplacé par d'autres de différente taille/géométrie, sans avoir à arrêter l'avance et le processus des unités de moulage modulaires (4) restantes.

26. Appareil selon l'une quelconque des revendications 15 à 25, comprenant en outre une unité de commande (CU) configurée pour faire tourner de manière indexée ladite unité de tambour (9) et synchroniser les opérations séquentielles de retrait des unités de moulage modulaires (4) à partir de ladite unité de tambour (9), ouvrir et retirer l'objet moussé (2), charger les éléments de revêtement respectifs (3, 3') et d'éventuels inserts, en vue de l'étape ultérieure de moussage et de transport, le long dudit trajet d'avance (P).

27. Appareil selon l'une quelconque des revendications 15 à 26, dans lequel lesdits premiers moyens de roulement (7) et lesdits seconds moyens de roulement (8) comprennent des rouleaux configurés avec un profil convexe pour s'adapter à des actions de déformation, ou comprennent des rouleaux configurés avec un revêtement en un matériau élastique tel que du caoutchouc pour exercer une action mieux répartie sur ladite unité de tambour (9), ou comprennent des rouleaux configurés avec des fentes circonférentielles réparties pour exercer des actions concentrées sur des parties renforcées du moule.
